# EUROPÄISCHE PATENTSCHRIFT

(11) **EP 2 686 254 B1**
(45) Veröffentlichungstag und Bekanntmachung des Hinweises auf die Patenterteilung: **15.08.2018**
(21) Anmeldenummer: 11709383.1
(22) Anmeldetag: 17.03.2011
(51) Int. Cl.: B65G 1/137, G06F 3/00, G06T 7/00, G06T 7/20, G06K 9/00, H04N 5/232

(54) **STEUERUNG UND ÜBERWACHUNG EINER LAGER- UND KOMMISSIONIERANLAGE DURCH BEWEGUNG UND SPRACHE**
CONTROLLING AND MONITORING A STORAGE AND ORDER-PICKING SYSTEM BY MEANS OF MOVEMENT AND SPEECH
COMMANDE ET SURVEILLANCE D'UNE INSTALLATION DE STOCKAGE ET DE PRÉPARATION DES COMMANDES PAR LE MOUVEMENT ET LA VOIX

(43) Veröffentlichungstag der Anmeldung: 22.01.2014
(73) Patentinhaber: SSI Schäfer Automation GmbH, 97232 Giebelstadt (DE)
(72) Erfinder: ISSING, Elmar, 97232 Giebelstadt (DE); KELLER, Rudolf, CH-8832 Wollerau (CH)
(74) Vertreter: Witte, Weller & Partner Patentanwälte mbB
(86) Internationale Anmeldenummer: PCT/EP2011/054087
(87) Internationale Veröffentlichungsnummer: WO 2012/123033

(56) Entgegenhaltungen:
- EP-A2- 1 537 959
- WO-A1-99/43150
- WO-A1-2010/129599
- WO-A1-2011/013079
- DE-A1- 10 215 885
- DE-A1-102006 057 266
- US-A1- 2006 126 738
- US-A1- 2010 013 860
- US-A1- 2010 131 549
- US-A1- 2010 231 692
- US-B1- 6 324 296
- US-B1- 6 724 930
- RUPERT REIF ET AL: "Pick-by-Vision comes on age", COMPUTER GRAPHICS, VIRTUAL REALITY, VISUALISATION AND INTERACTION IN AFRICA; 20090204 - 20090206, 24 February 2009 (2009-02-24), pages 23-31, XP058022390, DOI: 10.1145/1503454.1503459 ISBN: 978-1-60558-428-7
- DORFMULLER-ULHAAS K ET AL: "Finger tracking for interaction in augmented environments", AUGMENTED REALITY, 2001. PROCEEDINGS. IEEE AND ACM INTERNATIONAL SYMPO SIUM ON NEW YORK, NY, USA 29-30 OCT. 2001, LOS ALAMITOS, CA, USA,IEEE COMPUT. SOC, US, 29 October 2001 (2001-10-29), pages 55-64, XP010568048, DOI: 10.1109/ISAR.2001.970515 ISBN: 978-0-7695-1375-1
- YUSUKE TAMURA ET AL: "Prediction of Target Object Based on Human Hand Movement for Handing-Over between Human and Self-Moving Trays", ROBOT AND HUMAN INTERACTIVE COMMUNICATION, 2006. ROMAN 2006. THE 15TH IEEE INTERNATIONAL SYMPOSIUM ON, IEEE, PI, 1 September 2006 (2006-09-01), pages 189-194, XP031049682, ISBN: 978-1-4244-0564-0

## Beschreibung

Die vorliegende Erfindung betrifft ein Verfahren zum Steuern eines Lager- und Kommissioniersystems, das mit einem Bewegungssensorsystem ausgestattet ist. Mittels Messung der Bewegungen einer Bedienperson können Rückschlüsse über eine vorschriftsmäßige Durchführung von Manipulationsvorgängen gezogen werden, bei denen Stückgüter manuell manipuliert werden. Des Weiteren können Stückgüter nur mit den Händen ohne weitere Hilfsmittel vermessen werden. Schließlich werden Steuerbefehle, die Bewegungen innerhalb des Lager- und Kommissioniersystems verursachen, allein durch spezifische Gesten der Bedienperson generiert bzw. ausgelöst.

Im Gebiet der Intralogistik gibt es im Wesentlichen zwei Prinzipien, nach denen Waren innerhalb eines Lagers bewegt werden. Die Kommissionierung erfolgt entweder nach dem Prinzip "Mann-zur-Ware" oder nach dem Prinzip "Ware-zum-Mann". Außerdem gibt es eine Vielzahl von verschiedenen Kommissionierverfahren bzw. -leitsystemen, die mit Begriffen wie z.B. "Pick-to-Belt" oder "Pick-by-Light" oder ähnlich bezeichnet werden.

Timm Gudehus beschreibt in seinem Buch "Logistik" (Springer-Verlag, 2004, ISBN 3-540-00606-0) mit dem Begriff "Pick-to-Belt" ein Kommissionierverfahren, bei dem dezentral mit statischer Artikelbereitstellung kommissioniert wird. Beim dezentralen Kommissionieren haben Bereitstellungseinheiten (z.B. Lagerbehälter oder Stückgüter) einen festen Platz. Eine Kommissionierperson bewegt sich zum Kommissionieren in einem (dezentralen) Arbeitsbereich, in welchem sich eine bestimmte Anzahl von Zugriffsplätzen befindet. Kommissionieraufträge laufen mit oder ohne Sammelbehälter nacheinander auf einer Fördertechnik entsprechende Kommissionierzonen (Arbeitsbereich der Kommissionierperson) an. Unter einem Auftrag bzw. Kommissionierauftrag versteht man beispielsweise eine Kundenbestellung, die sich aus einer oder mehreren Auftragspositionen (Auftragszeilen) mit einer jeweiligen Menge (Entnahmemenge) eines Artikels oder eines Stückguts zusammensetzt. In den Kommissionierzonen halten die Aufträge an, bis geforderte Artikelmengen entnommen und abgelegt sind. Danach kann der Auftrag gegebenenfalls zu einer nachfolgenden Kommissionierperson fahren, die eine stromabwärts angeordnete Kommissionierzone zur Bearbeitung nächster Auftragszeilen bedient. Vorteile des dezentralen Kommissionierens sind: kurze Wege und kontinuierliches Arbeiten; keine Rüstzeiten und Wartezeiten an einer zentralen Basis; sowie eine höhere Pickleistung der Kommissionierpersonen. Deshalb wird bei "Pick-to-Belt" häufig auch ein "Batch-Picking" betrieben, d.h. möglichst viel Kundenaufträge, die einen bestimmten Artikeltyp enthalten, werden zusammengefasst, so dass die Kommissionierperson diesen Artikeltyp für alle Kundenaufträge entnimmt. Das reduziert die Laufwege des Kommissionierers.

Ein anderes Kommissionierverfahren wird als "Pick-by-Light" (Quelle: Wikipedia) bezeichnet. Pick-by-Light bietet signifikante Vorteile gegenüber klassischen, manuellen Kommissioniertechniken, welche das Vorliegen von Lieferscheinen oder Rechnungen zum Zeitpunkt der Kommissionierung erfordern. Bei Pick-by-Light-Systemen befindet sich an jedem Zugriffsplatz eine Signallampe mit einem Ziffernoder auch alphanumerischen Display sowie mit mindestens einer Quittiertaste und eventuell Eingabe- bzw. Korrekturtasten. Wenn der Auftragsbehälter, in den hinein die Artikel aus z.B. Lagerbehältern abgelegt werden, an einer Kommissionierposition ankommt, so leuchtet an demjenigen Zugriffsplatz, aus welchem die Artikel bzw. Stückgüter zu entnehmen sind, die Signallampe auf. Auf dem Display erscheint die zu entnehmende Anzahl. Die Entnahme wird dann mittels der Quittiertaste bestätigt, und die Bestandsänderung kann in Echtzeit an ein Lagerverwaltungssystem zurückgemeldet werden. Meistens arbeiten Pick-by-Light-Systeme nach dem Prinzip "Mann-zur-Ware".

Des Weiteren ist eine beleglose Kommissionierung mittels "Pick-by-Voice" bekannt (Quelle: Wikipedia). Dort findet eine Kommunikation zwischen einer Datenverarbeitungsanlage und der Kommissionierperson mittels Sprache statt. Anstatt ausgedruckter Kommissionierlisten oder Datenfunkterminals (d.h. mobile Datenerfassungseinheiten, MDE) arbeitet die Kommissionierperson meistens mit einem Headset (Kopfhörer und Mikrofon), welches z.B. an einen handelsüblichen Pocket-PC angeschlossen werden kann. Die Aufträge werden von einem Lagerverwaltungssystem mittels Funk, meist mittels WLAN/WiFi, an die Kommissionierperson übermittelt. Üblicherweise umfasst eine erste Sprachausgabe das Regal, aus welchem Stückgüter entnommen werden sollen. Ist die Kommissionierperson dort angelangt, kann sie eine am Regal angebrachte Prüfziffer nennen, die es dem System erlaubt, eine Überprüfung des Zugriffsorts vorzunehmen. Wurde die richtige Prüfziffer genannt, wird der Kommissionierperson eine Entnahmemenge in Form einer zweiten Sprachausgabe genannt. Wenn das Regal mehrere Zugriffsplätze aufweist, bekommt die Kommissionierperson selbstverständlich auch den konkreten Zugriffsplatz in Form einer Sprachaufgabe genannt. Nach einer Entnahme des zu kommissionierenden Stückguts bzw. der zu kommissionierenden Stückgüter quittiert die Kommissionierperson diesen Vorgang mittels Schlüsselwörtern, die von einer Datenverarbeitungseinrichtung mittels Spracherkennung verstanden werden.

Das Dokument DE 102 15 885 A1 offenbart ein Lager- und Kommissioniersystem zum Lagern und Kommissionieren von Stückgütern, das aufweist: eine manuelle Arbeitsstation mit einem definierten Arbeitsbereich, in welchem eine Bedienperson ein Stückgut mit ihren Händen auf eine vorgegebene Weise gemäß einer Kommissionierazfgabe, die der Bedienperson visuell und/oder auditiv mitgeteilt wird, manipulieren soll, indem die Bedienperson das Stückgut innerhalb des Arbeitsbereichs von einem Quellort aufnimmt, bewegt und an einen Zielort abgibt; ein Sensorsystem, das Hände der Bedienperson erfasst und in entsprechende Ortssignale umwandelt; und eine Recheneinheit, die mit dem Sensorsystem verbunden ist, um Orte im virtuellen Raum zu vergleichen, so dass der Bedienperson eine richtige oder falsche Durchführung der vorgegebenen Manipulationsweise mitgeteilt werden kann.

Eine Koordinierung der Abarbeitung von Aufträgen übernimmt im Hause der Anmelderin ein Auftragsabwicklungssystem, das meist in eine Kommissioniersteuerung integriert ist, die z.B. auch ein Warenwirtschaftssystem aufweisen kann. Die Kommissioniersteuerung kann ferner eine (Lager-) Platzverwaltung sowie eine Informationsanzeige integriert haben. Die Kommissioniersteuerung wird üblicherweise durch eine Datenverarbeitungsanlage realisiert, die vorzugsweise zur verzögerungsfreien Datenübertragung und Datenverarbeitung im Online-Betrieb arbeitet. Ein Problem bei den oben genannten herkömmlichen Kommissionierverfahren ist in der Art und Weise zu sehen, wie die Kommissionierperson - d.h. die Bedienperson einer Arbeitsstation - mit der Kommissioniersteuerung kommuniziert. Ein weiteres Problem stellt die Kontrolle und Überwachung der Bedienperson dar.

Ein Kommissioniervorgang besteht oft aus einer Vielzahl von sequentiellen Arbeits- bzw. Manipulationsschritten, bei denen die Stückgüter z.B. an einem Quellort aufgenommen und an einem Zielort abgegeben werden. Ob die Bedienperson auf den richtigen Quellort zugreift und an dem richtigen Zielort abgibt, ist unsicher und sollte deshalb überwacht werden (z.B. mittels Lichtschranken). Des Weiteren kann es zu Abweichungen zwischen einer Anzahl von zu manipulierenden Stückgütern und einer Anzahl von tatsächlich manipulierten Stückgütern kommen. Deshalb sollte auch die Anzahl der manipulierten Stückgüter überwacht werden.

Um eine Manipulation zu beginnen, muss die Bedienperson mit der Kommissioniersteuerung kommunizieren. Das Gleiche gilt, um ein Ende einer Manipulation anzuzeigen. Häufig werden zu diesem Zweck die bereits oben erwähnten Quittiertasten eingesetzt. Ein Nachteil von Quittiertasten ist, dass sie stationär angeordnet sind und dass sich die Bedienperson zu den Quittiertasten begeben muss, um diese zu betätigen. Dies erfordert Zeit. Je mehr Zeit pro Manipulation benötigt wird, desto geringer ist die Kommissionierleistung (Anzahl von Manipulationen pro Zeiteinheit).

Es stellt sich daher die Aufgabe, ein Verfahren zum Steuern eines Lager- und Kommissioniersystems mit einer Hubeinrichtung vorzusehen, so dass Steuerbefehle, die Bewegungen innerhalb des Lager- und Kommissioniersystems verursachen, allein durch spezifische Gesten der Bedienperson ausgelöst werden können.

Diese Aufgabe wird durch ein Verfahren gemäß Anspruch 1 gelöst.

Die Bewegung der Bedienperson wird während eines Kommissioniervorgangs, vorzugsweise in Echtzeit, verfolgt. Holt sich die Bedienperson ein Stückgut von einem falschen Ort, kann dies in der virtuellen Welt (3D-Referenzmodell) der Arbeitsstation sofort durch einen Vergleich einer errechneten Position mit einer Referenzposition erkannt werden. Gleiches gilt natürlich auch für die Abgabe und gegebenenfalls auch für die Bewegung des Stückguts zwischen der Aufnahme und Abgabe. Es kann beispielsweise sein, dass das Stückgut zwischen der Aufnahme und Abgabe um einen bestimmten Winkel gedreht werden soll, um für eine anschließende Stapelung auf einer Auftragspalette besser orientiert zu sein. Eine moderne Pack-Software bezieht derartige Bewegungen fest in die Planung einer Beladungskonfiguration mit ein.

Es versteht sich, dass nachfolgend unter einer Trajektorie nicht nur eine zeitabhängige Kurve im Raum verstanden wird, die üblicherweise durch eine (dynamische) Bewegung der Bedienperson hervorgerufen wird, sondern dass der Begriff "Trajektorie" auch ein Verharren an einem Ort umfassen kann. In diesem Fall ist die Trajektorie keine sich durch den Raum erstreckende Bahn, sondern stellt den Verlauf eines Punkts innerhalb eines sehr, sehr kleinen Volumens dar. Idealerweise bewegt sich der Punkt in diesem Fall nicht. Generell wird nachfolgend unter einer "Trajektorie" im Sinne einer Objektverfolgung eine Zeitsequenz von (3D-)Koordinaten verstanden, die einen Bewegungspfad des Objekts während einer Laufzeit darstellt.

Das Lager- und Kommissioniersystem kann einen Wareneingang, einen Warenausgang, mindestens ein Lager und/oder eine Fördertechnik aufweisen.

Die Erfindung kann in jedem Bereich eines Lager- und Kommissioniersystems zum Einsatz kommen und ist nicht auf spezifische Orte oder Bereiche beschränkt.

Insbesondere ist die Arbeitsstation ein Packplatz, , der vorzugsweise nach dem Prinzip "Ware-zum-Mann" betrieben wird.

Das Bewegungssensorsystem kann ein Positionsbestimmungssystem aufweisen, das mindestens eine Kamera und mindestens zwei Lichtquellen aufweist, wobei die mindestens zwei Lichtquellen mit einem festen Abstand zueinander angeordnet sind, wobei an den Händen oder Unterarmen der Bedienperson jeweils die Kamera oder die zwei Lichtquellen, vorzugsweise parallel zur Elle oder zum ausgestreckten Zeigefinger, angebracht sind, und wobei die Recheneinheit eingerichtet ist, basierend auf einem Bild, welches die Kamera von den zwei Lichtquellen aufnimmt, eine absolute Positionsbestimmung für die Hände und/oder Unterarme im Arbeitsbereich durchzuführen.

Die (absolute) Positionsbestimmung erfolgt hierbei im so genannten Zeigermodus. Die Lichtquellen und die Kamera sind aufeinander ausgerichtet und können sich gegenseitig "sehen". Die Positionsbestimmung erfolgt im Wege einer Triangulation, wobei der Abstand der Lichtquellen relativ zueinander vorher bereits bekannt ist. Dabei ist es irrelevant, ob die Lichtquellen in Ruhe sind und die Kamera bewegt wird oder ob die Kamera in Ruhe ist und die Lichtquellen bewegt werden.

Ferner ist es bevorzugt, wenn die mindestens eine Kamera oder die mindestens zwei Lichtquellen jeweils an einer Haltevorrichtung angebracht sind, die vorzugsweise derart flexibel geformt ist, dass die Bedienperson die Haltevorrichtung während der Durchführung der Stückgutmanipulation dauerhaft, verliersicher und eine feste Ausrichtung beibehaltend anziehen kann. Das zuvor erwähnte Positionsbestimmungssystem bzw. Teile davon sind in einer vorgegebenen Ausrichtung an der Bedienperson anzubringen. Die Anbringung selbst erfolgt z.B. über einen Handschuh, eine Armstulpe oder Ähnliches, wie z.B. Gummibänder oder elastische Ringe. Der Zeigefinger und die Elle sind zur Anbringung und Ausrichtung prädestiniert. Ein ausgestreckter Zeigefinger ist üblicherweise parallel zur Elle orientiert, wenn man mit einem ausgestreckten Arm auf ein Objekt deutet.

Wie oben erwähnt, werden als Haltevorrichtung insbesondere ein Handschuh, eine Armstulpe oder eine Vielzahl von, vorzugsweise elastischen, Bändern oder Ringen eingesetzt.

Ferner ist es von Vorteil, wenn das Bewegungssensorsystem zusätzlich mindestens zwei Bewegungssensoren aufweist, die entlang unterschiedlicher Raumrichtungen ausgerichtet sind und die richtungsabhängige (Bewegungs- und Positions-) Informationen erzeugen, die an die Recheneinheit übermittelt werden, wobei die Recheneinheit eingerichtet ist, basierend auf den richtungsabhängigen Informationen eine relative Positionsbestimmung der Bedienperson im Arbeitsbereich durchzuführen.

Mit den Bewegungssensoren können sowohl translatorische Bewegungen als auch rotatorische Bewegungen erfasst werden. Wenn drei Bewegungssensoren vorgesehen sind, die entlang von Vektoren ausgerichtet sind, die wiederum den Raum des Arbeitsbereichs aufspannen, lässt sich jede Positionsänderung rechnerisch bestimmen. Wurde das System zuvor zusätzlich kalibriert, indem eine absolute Positionsbestimmung durchgeführt wurde, kann so auch über längere Zeiträume eine absolute Position berechnet werden.

Deshalb eignen sich Bewegungssensoren ideal zur Kombination mit dem zuvor erwähnten Positionsbestimmungssystem, das jedoch ohne weitere technische Unterstützung nur im Zeigermodus funktioniert. Wird der Zeigermodus verlassen, kann die Positionsbestimmung - durch Rechnung - basierend auf den Daten fortgesetzt werden, die die Bewegungssensoren liefern.

Außerdem ist es von Vorteil, wenn das Bewegungssensorsystem ein Positionsbestimmungssystem aufweist, das mindestens eine stationäre Lichtquelle und mindestens eine stationäre Kamera aufweist, wobei jede Lichtquelle den Arbeitsbereich ausleuchtet, wobei die mindestens eine stationäre Kamera so angeordnet ist, dass sie zumindest einige Strahlen erfasst, die von der Bedienperson reflektiert werden und die die mindestens eine stationäre Kamera in Reflexionssignale umwandelt, wobei die Recheneinheit eingerichtet ist, basierend auf den Reflexionssignalen eine relative Positionsbestimmung für die Bedienperson innerhalb des Arbeitsbereichs durchzuführen.

Hier macht man sich die sogenannte "Motion Capturing-Methode" zunutze. Punkte, die zusätzlich mit Markern markiert sein können, werden permanent beleuchtet und deren Reflektionen erfasst, um die Bewegung der Punkte im Raum rechnerisch nachvollziehen zu können. Für viele Anwendungen in der Intralogistik reicht diese grobe, üblicherweise leicht zeitverzögerte, Positionsbestimmung aus, um ansatzweise die Qualität (Richtigkeit) des Kommissioniervorgangs zu überprüfen und gegebenenfalls Korrekturmaßnahmen einzuleiten.

Bei einer weiteren bevorzugten Ausgestaltung weist das Positionsbestimmungssystem zusätzlich Marker auf, wobei vorzugsweise jede Hand und/oder jeder Unterarm der Bedienperson mit einem der Marker mit unveränderlicher, vorgegebener Ausrichtung relativ zur Bedienperson verbunden ist, und wobei die mindestens eine stationäre Lichtquelle (isotrop) Strahlen mit einer ausgewählten Wellenlänge in den Arbeitsbereich aussendet, die von der Bedienperson, dem Stückgut und der Arbeitsstation gar nicht oder nur schwach reflektiert werden, wobei der Marker aus einem Material gebildet ist, das die ausgewählte Wellenlänge besonders stark reflektiert.

Die Bedienperson muss also nicht unbedingt mit einem aktiven, sendenden Marker ausgerüstet werden, um Informationen über die Position der Bedienperson gewinnen zu können. Da im Wesentlichen die Marker die Strahlen der stationären Lichtquelle reflektieren, können zeitaufwändige Nachbearbeitungen der Daten und kostspielige Filter zur Unterdrückung unerwünschter Signale weggelassen werden.

Außerdem können die Marker längliche, flexible Streifen, die entlang einer Elle, eines Daumens oder eines Zeigefingers der Bedienperson anbringbar sind, oder rasterförmig anbringbare Punkte sein.

Bei einer weiteren vorteilhaften Ausführungsform sendet die mindestens eine stationäre Lichtquelle des Positionsbestimmungssystems eine Vielzahl von separaten Strahlen in einem vordefinierten Muster diskret (anisotrop) in den Arbeitsbereich aus, wobei mindestens zwei stationäre Kameras vorgesehen sind, die gemeinsam mit der mindestens einen stationären Lichtquelle entlang einer Geraden angeordnet sind, so dass die mindestens zwei stationären Kameras zumindest einige der separaten Strahlen erfassen, die von der Bedienperson reflektiert werden, und in Reflexionssignale umwandeln, wobei die Recheneinheit eingerichtet ist, basierend auf den Reflexionssignalen eine relative Positionsbestimmung für die Hände und/oder Unterarme im Arbeitsbereich durchzuführen.

Hier wird wiederum ein passives System beschrieben, bei dem die Bedienperson lediglich als Reflektor dient. Hierbei ist es noch nicht einmal unbedingt erforderlich, dass die Bedienperson mit entsprechenden Markern ausgestattet wird. Da die Lichtquelle ein aus diskreten Stahlen bestehendes, regelmäßiges Muster aussendet, kann allein mit einer einzigen Kamera bereits eine Tiefeninformation über das reflektierende Objekt (Bedienperson) gewonnen werden. Durch die Tatsache, dass zwei Kameras auf gleicher Höhe mit der Lichtquelle angeordnet sind, können weiter die Grundsätze der Stereoskopie in Ansatz gebracht werden, um zusätzliche Tiefeninformationen zu extrahieren. Außerdem ist es möglich, zumindest eine relative Positionsbestimmung für das Objekt durchzuführen, das sich innerhalb des ausgeleuchteten Sichtfelds der Lichtquelle bewegt und somit auch Strahlung reflektiert. Das System kann vorab kalibriert werden, um auch eine absolute Position errechnen zu können. Vorteil dabei ist, dass die Bedienperson nicht mit Markern oder Ähnlichem versehen werden muss und trotzdem Informationen über eine aktuelle Position bestimmt werden können. Die Bedienperson kann auf jeden Fall ungestört arbeiten.

Ferner ist es von Vorteil, wenn die mindestens zwei stationären Kameras in unterschiedlichen Frequenzbereichen, vorzugsweise im Infrarotbereich und im sichtbaren Spektrum, arbeiten.

Infrarotlicht stört die Bedienperson bei ihrer Arbeit nicht. Eine RBG-Kamera, die sichtbares Licht aufnimmt, kann neben der Gewinnung von Tiefeninformationen zusätzlich zur Erzeugung eines normalen Videobilds eingesetzt werden.

Bei einer weiteren besonderen Ausgestaltung weist das System eine Anzeigevorrichtung auf, die die Steuersignale der Recheneinheit empfängt und die der Bedienperson eine als richtig oder falsch erkannte Manipulationsweise in Echtzeit mitteilt.

Auf diese Weise ist es möglich, sofort einzugreifen, wenn ein Fehler erkannt wird. Die Bedienperson kann sogar an der Beendigung eines fehlerhaften Manipulationsschrittes gehindert werden. Dann kommt es erst gar nicht zum Fehler. Bei einer richtigen Ausführung kann dies der Bedienperson als positives Feedback zeitnah mitgeteilt werden.

Vorzugsweise weist das System ferner eine Videokamera auf, die ein Echtbild des Arbeitsbereichs erzeugt, wobei die Recheneinheit eingerichtet ist, in Echtzeit Bildsignale zu erzeugen und an die Anzeigevorrichtung zu senden, die dem Echtbild ein Referenz-Quellvolumen, ein Referenz-Zielvolumen sowie die erkannten Hände und/oder Unterarme der Bedienperson überlagern und/oder Arbeitsanweisungen überlagern.

Wenn der Bedienperson ein derartiges Videobild während der Durchführung der gewünschten Manipulation im Arbeitsbereich angezeigt wird, kann die Bedienperson sofort erkennen, ob sie die gewünschte Manipulation richtig durchführt und was zu tun ist. Beim Greifen von Stückgütern kann die Bedienperson am Bildschirm sehen, ob sie die Stückgüter vom richtigen Ort nimmt, weil der richtige Ort im überlagert dargestellten Quellvolumen liegen muss. Beim Abgeben gilt Analoges, da das Zielvolumen überlagert dargestellt wird. Wenn auf dem Weg zwischen der Aufnahme und der Abgabe zusätzlich eine Verkippung oder Drehung des Stückguts vorgenommen werden soll, kann dies ebenfalls (dynamisch) visualisiert werden. Dies ist besonders für Packanwendungen von Vorteil, da die Stückgüter meistens in einer einzigen vorbestimmten Ausrichtung auf den bereits auf der Auftragspalette befindlichen Stückgutstapel geschichtet werden müssen. In diesem Zusammenhang kann es durchaus relevant sein, ob das Stückgut richtig herum orientiert ist oder auf dem Kopf steht, weil nicht jedes Stückgut eine homogene Gewichtsverteilung aufweist.

Außerdem kann das System ferner ein Sprachleitsystem aufweisen, das einen Kopfhörer und ein Mikrofon, vorzugsweise in Form eines Headsets, aufweist.

Mit dem Sprachleitsystem (Pick-by-Voice) können die Manipulationsschritte zusätzlich mittels Sprache gesteuert werden. Dies betrifft sowohl Anweisungen, die die Bedienperson auditiv empfängt, als auch Anweisungen (z.B. eine Bestätigung), die die Bedienperson durch Sprache an die Kommissioniersteuerung richtet.

Ferner wird ein Verfahren zum Überwachen und Anleiten eines manuellen Kommissioniervorgangs offenbart, bei dem ein Stückgut gemäß einer Kommissionier-Aufgabe händisch von einer Bedienperson an einem Quellort aufgenommen wird und an einen Zielort abgegeben wird, wobei das Verfahren die folgenden Schritte aufweist: der Bedienperson eine Kommissionier-Aufgabe zuweisen; der Bedienperson im realen Raum die Aufgabe, vorzugsweise als Sequenz von Manipulationsschritten, visuell oder auditiv mitteilen; Aufnehmen, Bewegen und Abgeben des Stückguts im realen Raum durch die Bedienperson; Abtasten der tatsächlichen Bewegung, vorzugsweise der Hände und/oder der Unterarme, der Bedienperson im realen Raum mittels eines Bewegungssensorsystems; Umwandeln der im realen Raum abgetasteten Bewegung in Abbildungspunkte oder in mindestens eine Trajektorie in einem virtuellen Raum, der dem realen Raum als Referenzmodell nachgebildet ist und in welchem der Quellort als Referenz-Quellvolumen und der Zielort als Referenz-Zielvolumen definiert sind; Prüfen durch Vergleichen, ob die Trajektorie mit einer Referenz-Trajektorie übereinstimmt, wobei die Referenz-Trajektorie einem Bewegungsablauf im virtuellen Raum in vollständiger Übereinstimmung mit der mitgeteilten Aufgabe entspricht, oder ob die Abbildungspunkte anfänglich im Referenz-Quellvolumen und später im Referenz-Zielvolumen liegen; und Ausgeben einer Fehlermeldung oder einer Korrekturmitteilung an die Bedienperson, wenn der Schritt des Prüfens in einer Abweichung zwischen der Trajektorie und der Referenz-Trajektorie resultiert hat oder wenn der Schritt des Prüfens ergibt, dass die Abbildungspunkte nicht im Referenz-Quellvolumen und/oder im Referenz-Zielvolumen liegen.

Mit dem oben beschriebenen Verfahren wird die Bewegung der Bedienperson im realen Raum verfolgt (Tracking), die als Ist-Daten in den virtuellen Raum abgebildet werden und dort mit Soll-Daten verglichen werden. Die Auflösung ist so gut, dass es möglich ist, allein die Hände der Bedienperson zu verfolgen. Sobald die Bedienperson etwas Unerwartetes tut, wird es erkannt und können Gegenmaßnahmen eingeleitet werden. Die Fehlerquote lässt sich so drastisch reduzieren. Quittiertasten oder Ähnliches müssen dabei nicht unbedingt betätigt werden, so dass die Bedienperson ihren Kommissioniervorgang vollkommen ungestört durchführen kann. Die Kommissionierzeit verkürzt sich. Wird ein Stückgut von einem falschen Quellort aufgenommen oder an einen falschen Zielort abgegeben, wird dies sofort (d.h. in Echtzeit) registriert und der Bedienperson mitgeteilt.

Bei einer besonderen Ausführungsform wird für jede Hand oder jeden Unterarm der Bedienperson mindestens eine Referenz-Trajektorie berechnet, die im Referenz-Quellvolumen startet und im Referenz-Zielvolumen endet.

Die Kommissioniersteuerung kennt den Aufnahmeort und den Abgabeort, bevor die gewünschte Manipulation durch die Bedienperson durchgeführt wird. Somit ist es möglich, Soll-Bewegungsabläufe festzulegen, die anschließend mit tatsächlichen Ist-Bewegungsabläufen verglichen werden können, um Abweichungen feststellen zu können.

Außerdem ist es von Vorteil, wenn ferner geprüft wird, ob eine richtige Anzahl der Stückgüter von der Bedienperson aufgenommen wird, indem ein Abstand zwischen den Händen der Bedienperson bestimmt und mit einem ganzzahligen Vielfachen einer Abmessung eines Stückguts auf Plausibilität verglichen wird, wobei mehrere sortenreine Stückgüter gleichzeitig gemäß der Aufgabe zu bewegen sind.

Die Bedienperson muss die mehreren Stückgüter nicht einzeln bewegen, damit festgestellt werden kann, ob die richtige Anzahl von Stückgütern manipuliert wurde (Zählkontrolle). Die Kommissionierperson kann alle zu manipulierenden Stückgüter gleichzeitig bewegen, sofern sie dazu in der Lage ist, wobei die tatsächlich gegriffenen Stückgüter während der Bewegung gezählt werden. Dabei ist es nicht erforderlich, dass die Bedienperson zu einer vorbestimmten Zeit oder an einem vorgegebenen Ort mit der Bewegung innehält. Die Bedienperson kann in diesem Sinne ungestört arbeiten und die Bewegung kontinuierlich durchführen. Die Erfinder haben erkannt, dass beim Greifen mehrerer Stückgüter meist beide Hände zum Einsatz kommen und während des Bewegungsvorgangs einen gleichbleibenden Abstand zueinander aufweisen, der insbesondere bei der Analyse der Trajektorien klar erkannt werden kann. Wenn sortenreine Stückgüter manipuliert werden, sind die Basisabmessungen (wie z.B. Höhe, Breite, Tiefe) hinsichtlich ihrer Kombinationsmöglichkeiten überschaubar und können in die Analyse des Abstands zwischen den Händen einfließen. Auf diese Weise kann schnell bestimmt werden, ob die Bedienperson die richtige Anzahl und die richtigen Stückgüter gegriffen hat.

Ferner wird ein Verfahren zum manuellen Bestimmen einer Abmessung eines Stückguts offenbart, wobei ein System eingesetzt wird, wobei die Hände, insbesondere die Zeigefinger, mit Markern versehen sind, wobei das Verfahren die folgenden Schritte aufweist: Auswahl einer Grundkörperform für das Stückgut, wobei jede Grundkörperform durch einen Satz von spezifischen Basislängen vordefiniert ist; der Bedienperson zu messende Basislängen sequentiell mitteilen; Anlegen der Marker seitlich an das Stückgut in der realen Welt zur Bestimmung jeder mitgeteilten Basislänge; und Bestimmen eines Abstands zwischen den Markern in der virtuellen Welt und Zuordnen des so bestimmten Abstands zur jeweils zu messenden Basislänge (Teach-In-Verfahren).

Die Bedienperson braucht zur Bestimmung einer Stückgutlänge nichts anderes als ihre Hände. Auf jegliches zusätzliches Hilfswerkzeug kann verzichtet werden. Die Vermessung eines Stückguts erfolgt schnell, da die Hände lediglich für eine sehr kurze Zeitdauer angelegt werden müssen.

Selbst komplexere geometrische Formen, wie z.B. ein Tetraeder (Pyramide), lassen sich schnell und einfach vermessen. Die Bedienperson kann eine Auswahl von Grundkörpern angezeigt bekommen, aus der sie die Form des gerade zu vermessenden Stückguts auswählen kann. Sobald eine Grundform ausgewählt ist, bekommt die Bedienperson automatisch angezeigt, welche Längen sie messen muss. Die Anzeige erfolgt dabei vorzugsweise visuell, indem die Punkte an der ausgewählten Grundform markiert dargestellt werden.

Zusätzlich können neben den Zeigefingern auch die Daumen jeweils mit mindestens einem Marker versehen sein, wobei der Zeigefinger und der Daumen einer jeden Hand während des Messens vorzugsweise senkrecht voneinander abgespreizt werden.

Daumen und Zeigefinger spannen in diesem Fall eine Ebene auf, die zum Vermessen des Stückguts eingesetzt werden kann. Außerdem können Winkel so auf einfache Weise angezeigt werden. Ein Drehen und Verkippen des Stückguts, um alle Seiten zu vermessen, ist nicht unbedingt notwendig. Zeigefinger und Daumen müssen nicht zwingend senkrecht voneinander abgespreizt werden. Mit einem beliebigen Winkel zwischen dem Zeigefinger und dem Daumen kann jeder Winkel am Stückgut gemessen werden.

Bei einer anderen Ausgestaltung des Verfahrens wird das zu vermessende Stückgut zur Bestimmung einer neuen Basislänge um eine seiner Symmetrieachsen gedreht.

Die Bedienperson kann der Kommissioniersteuerung durch bloße Handbewegungen anzeigen, ob sie mit einem Manipulationsteilschritt fertig ist oder ob sie mit einem neuen Manipulationsschritt anfangen möchte. Quittiertasten, Schalter, Lichtschranken und Ähnliches können vollständig weggelassen werden. Ein Manipulationsschritt kann schneller durchgeführt werden, da das Betätigen einer Quittiertaste und Ähnliches entfallen, insbesondere die damit verbundenen Wege.

Insbesondere kann sich die Bedienperson bei einer übergeordneten Steuereinheit anmelden, sobald die Bedienperson erstmals eine Arbeitszelle betritt.

Durch eine "Log-in"- bzw. Anmeldungsgeste kann sich die Bedienperson auf einfache Weise gegenüber der Kommissioniersteuerung identifizieren, die vorzugsweise in der Steuereinheit durch Hardware und/oder Software implementiert ist. Jede Bedienperson kann eine eigene (eindeutige) Identifikationsgeste haben. Auf diese Weise kann jeder erfassten Bewegung innerhalb einer Arbeitszelle eindeutig eine Bedienperson zugeordnet werden.

Ferner ist es von Vorteil, wenn sich die Bedienperson an jeder Hand und/oder an jedem Unterarm mindestens einen Marker befestigt, bevor sie die Arbeitszelle betritt.

In dieser Konstellation ist es möglich, dass Bedienpersonen die Arbeitszelle auch unerkannt betreten können, wenn sie keine Marker mit sich führen. Eine Unterscheidung zwischen aktiven und inaktiven Bedienpersonen ist somit auf einfache Weise möglich.

Bei einer weiteren bevorzugten Ausgestaltung werden die Bedienperson, und insbesondere die Marker, permanent abgetastet, um eine Log-in-Geste zu erkennen.

Außerdem ist es generell von Vorteil, wenn die jeweiligen Schritte in Echtzeit ausgeführt werden.

Somit ist es möglich, jederzeit korrigierend einzugreifen bzw. jederzeit abfragen zu können, welche Person gerade welchen Vorgang innerhalb des Lager- und Kommissioniersystems bearbeitet, wo sie sich befindet, wo sie vorher war, wie effizient sie arbeitet, etc.

Weiter ist es generell bevorzugt, wenn in einem ersten Schritt eine Positionskalibrierung durchgeführt wird.

Eine Positionskalibrierung ist insbesondere für eine absolute Positionsbestimmung von Vorteil, weil dann selbst mit den relativen Positionsbestimmungssystemen absolute Positionen angegeben werden können.

Insbesondere werden die Trajektorien der Bedienperson gespeichert und datentechnisch mit Informationen zu solchen Stückgütern verknüpft, die die Bedienperson während einer (Arbeits-) Schicht bewegt hat, wobei insbesondere eine Arbeitsdauer, ein Bewegungsweg, insbesondere in horizontaler und vertikaler Richtung, und ein Gewicht für jedes bewegte Stückgut berücksichtigt werden.

In vielen Ländern gibt es gesetzliche Bestimmungen, dass Bedienpersonen fest vorgegebene Grenzwerte für Gewichte, die sie während einer Arbeitsschicht heben müssen oder schieben müssen aus ergonomischen Gründen, nicht überschreiten dürfen. Bisher war es nahezu unmöglich, ein Gesamtgewicht festzustellen, welches eine Bedienperson während ihrer Arbeitsschicht bereits gehoben oder geschoben hat. Insbesondere Hubbewegungen waren nahezu unmöglich nachzuvollziehen. Hier wird Abhilfe geboten. Die Eigenschaften (z.B. Gewicht) der Stückgüter sind bekannt. Die Bewegung der Bedienperson wird verfolgt. Rückschlüsse auf aussagekräftige Werte sind sofort möglich.

Bei einer weiteren vorteilhaften Ausgestaltung wird zusätzlich ein Videobild des Arbeitsbereichs erzeugt, dem das Referenz-Quellvolumen, das Referenz-Zielvolumen, die abgetasteten Hände, die abgetasteten Unterarme und/oder die abgetastete Bedienperson überlagert und anschließend der Bedienperson über eine Anzeigevorrichtung in Echtzeit angezeigt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: ein Blockdiagramm eines Lager- und Kommissioniersystems;
- Fig. 2: eine Draufsicht auf eine Arbeitsstation;
- Fig. 3A und 3B: ein Bewegungssensorsystem mit einem Positionsbestimmungssystem;
- Fig. 4: ein weiteres Positionsbestimmungssystem in einer Draufsicht;
- Fig. 5: ein weiteres Positionsbestimmungssystem in einer Seitenansicht;
- Fig. 6: eine Draufsicht auf eine Auftragspalette;
- Fig. 7: eine perspektivische Ansicht einer Auftragspalette mit angedeutetem Stückgutstapel und visualisiertem Zielvolumen;
- Fig. 8: ein Flussdiagramm eines Verfahrens zum Kommissionieren eines Stückguts;
- Fig. 9: ein Flussdiagramm eines Verfahrens zum Kommissionieren mehrerer Stückgüter aus Lagerbehältern in Auftragsbehälter;
- Fig. 10: eine perspektivische Ansicht eines Lagerbehälterpuffers;
- Fig. 11: ein Flussdiagramm eines Verfahrens zur Zählkontrolle und Vermessung von Stückgütern;
- Fig. 12a und 12b: perspektivische Darstellungen einer Zählkontrolle während eines Umladevorgangs;
- Fig. 13 bis 13c: eine Sequenz eines Vermessungsvorgangs in perspektivischer Darstellung;
- Fig. 14: eine Stückgut-Eigenschafts-Tabelle;
- Fig. 15: eine Mitarbeiter-Tabelle;
- Fig. 16: ein Flussdiagramm eines Log-in-Verfahrens;
- Fig. 17: eine perspektivische Darstellung einer Bedienperson, die nach dem Prinzip "Mann-zur-Ware" kommissioniert; und
- Fig. 18 bis 21: exemplarische Gesten der Bedienperson in perspektivischer Darstellung zur Steuerung einer Arbeitsstation.

Bei der nachfolgenden Beschreibung der Figuren werden gleiche Elemente, Einheiten, Merkmale etc. mit jeweils den gleichen Bezugszeichen bezeichnet werden.

Die Erfindung kommt im Gebiet der Intralogistik zum Einsatz und betrifft im Wesentlichen drei miteinander wechselwirkende Aspekte, nämlich i) eine Kommissionierführung (im Sinne eines Kommissionierleitsystems), ii) eine Kontrolle und Überwachung von Mitarbeitern (Kommissionier- bzw. Bedienpersonen) und iii) eine Steuerung verschiedener Komponenten eines Arbeitsplatzes oder eines gesamten Lager- und Kommissioniersystems durch Gestenerkennung.

Unter dem Begriff "Gestenerkennung" wird nachfolgend eine automatische Erkennung von Gesten durch eine elektronische Datenverarbeitungsanlage (Computer) verstanden, die mit einer entsprechenden Software betrieben wird. Die Gesten können von Menschen (Kommissionier- bzw. Bedienpersonen) ausgeführt werden. Erkannte Gesten werden zur Mensch-Computer-Interaktion genutzt. Jede (starre) Haltung und jede (dynamische) Körperbewegung kann prinzipiell eine Geste darstellen. Ein besonderer Fokus wird nachfolgend auf die Erkennung von Hand- und Armgesten gelegt werden.

Im Lichte einer Mensch-Computer-Interaktion kann eine Geste als eine Bewegung des Körpers definiert werden, die eine Information beinhaltet. Winken stellt z.B. eine Geste dar. Das Drücken eines Knopfs auf einer Tastatur stellt keine Geste dar, da die Bewegung eines Fingers in Richtung einer Taste nicht relevant ist. Das einzige, was bei diesem Beispiel zählt, ist die Tatsache, dass die Taste gedrückt wird. Gesten erschöpfen sich aber nicht nur in Bewegungen, eine Geste kann auch durch eine statische (Hand-) Haltung erfolgen. Zur Erfassung der Gesten kann eine (aktive) Sensorik direkt am Körper der Bedienperson angebracht werden. Alternativ (und ergänzend) können die Gesten der Bedienperson auch durch eine externe Sensorik lediglich (passiv) beobachtet werden. Die nachfolgend noch näher zu erläuternden Sensorsysteme werden am Körper der Bedienperson getragen, insbesondere an den Händen und/oder Unterarmen. Die Bedienperson kann z.B. Datenhandschuhe, Armstulpen, Ringe, Bänder u.Ä. anziehen. Alternativ können mit der Hand geführte Systeme eingesetzt werden. Bei Systemen mit externer Sensorik handelt es sich zumeist um kameragestützte Systeme. Die Kameras werden eingesetzt, um Bilder der Bedienperson zu erzeugen, die anschließend mittels Software analysiert werden, um Bewegungen und Haltungen der Bedienperson zu erkennen.

Bei der eigentlichen Erkennung von Gesten fließen die Informationen der Sensorik in Algorithmen ein, welche die Rohdaten analysieren und Gesten erkennen. Dabei kommen Algorithmen zur Mustererkennung zum Einsatz. Zur Rauschunterdrückung und Datenreduktion werden die Eingangsdaten häufig gefiltert und gegebenenfalls vorbearbeitet. Anschließend werden gestenrelevante Merkmale extrahiert, die klassifiziert werden. In diesem Zusammenhang können z.B. neuronale Netzwerke (künstliche Intelligenz) eingesetzt werden.

Bei einem anderen passiven Ansatz der allgemeinen Bewegungserkennung (ohne Gestenerkennung), die nachfolgend noch genauer beschrieben werden wird, kommt z.B. eine Tiefensensorkamera und eine Farbkamera mit entsprechender Software zum Einsatz, wie sie z.B. in der WO 2011/013079 A1 beschrieben ist. Zum Beispiel ein Infrarotlaser projiziert ein sternenhimmelähnliches regelmäßiges Muster in einen zu beobachtenden (Arbeits-)Bereich, in welchem sich die Bedienperson bewegt. Die Tiefensensorkamera empfängt das reflektierte Infrarotlicht z.B. mit einem monochromen CMOS-Sensor. Eine Sensor-Hardware vergleicht ein Bild, das aus den reflektierten Infrarotstrahlen erzeugt wird, mit einem gespeicherten Referenzmuster. Zusätzlich kann aus den Unterschieden durch eine aktive Stereotriangulierung eine so genannte Tiefenmaske berechnet werden. Bei der Stereotriangulierung nimmt man zwei Bilder aus unterschiedlichen Perspektiven auf, sucht die korrespondierenden Punkte und nutzt deren unterschiedliche Positionen in den beiden Bildern, um die Tiefe zu berechnen. Da die Bestimmung korrespondierender Punkte im Allgemeinen schwierig ist, insbesondere, wenn die sich einem bietende Szene völlig unbekannt ist, zahlt sich die Ausleuchtung mit einem strukturierten Lichtmuster aus. Grundsätzlich reicht eine Kamera aus, wenn man ein reflektiertes Muster einer Referenzszene (z.B. Schachbrett in einem Meter Abstand) kennt. Eine zweite Kamera kann in Form der RBG-Kamera implementiert sein.

Auf diese Weise kann sowohl die Form (Tiefe) der Bedienperson als auch die relative Entfernung zu den Kameras bestimmt werden. Nach einem kurzen Scan kann auch die Form (Kontur) der Bedienperson erfasst und gespeichert werden. Dann stört es auch nicht, wenn andere Gegenstände durch das Bild laufen oder zwischen die Bedienperson und die Kamera gestellt werden.

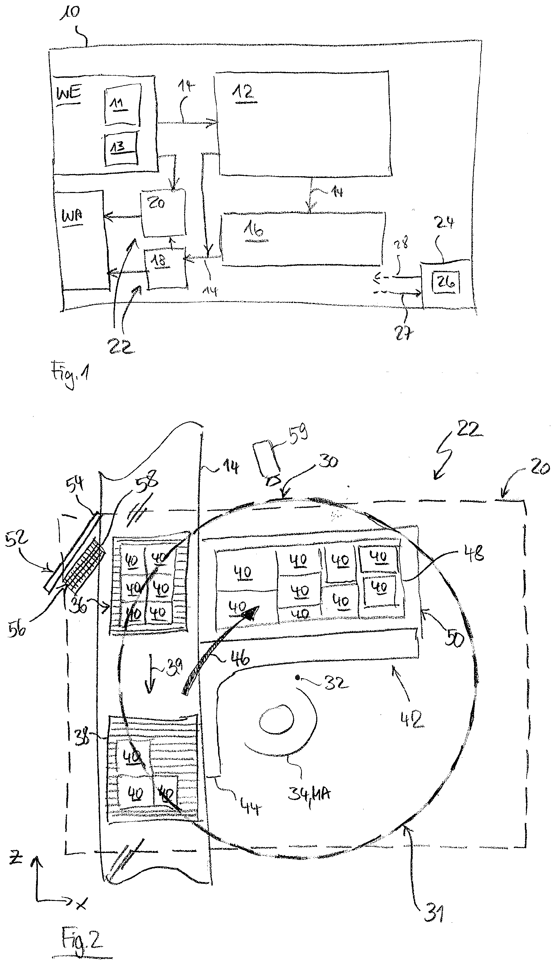

Bezug nehmend auf Fig. 1 ist ein Lager- und Kommissioniersystem 10 gezeigt, das einen Wareneingang WE und einen Warenausgang WA und/oder ein Lager 12 aufweisen kann. Im Bereich des Wareneingangs WE können ferner so genannte "Teach-in"-Plätze 11 und Vereinzelungsstationen 13 vorgesehen sein. An einem "Teach-in"-Platz 11 kann eine Abmessung (z.B. Höhe, Breite und Tiefe) eines Stückguts vermessen werden, um einer übergeordneten Kommissioniersteuerung Daten zu liefern, die zur Handhabung des entsprechenden Stückguts (z.B. Einlagern, Lagervolumen, Auslagern, Packen, etc.) benötigt werden.

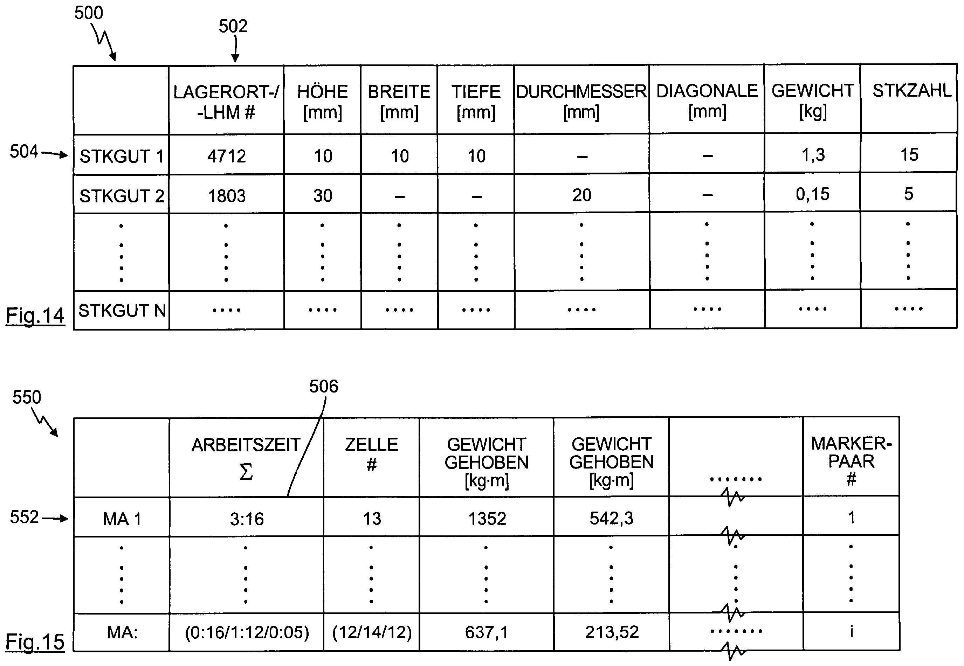

Grundsätzlich können alle Komponenten des Lager- und Kommissioniersystems 10, die an einem Materialfluss beteiligt sind, über bidirektional betreibbare Fördertechniken bzw. Förderer 14 miteinander verbunden sein. Die Förderer 14 sind in Fig. 1 durch Pfeile angedeutet. Über die Förderer 14 kann das Lager 12 mit einem Sorter 16 und anderen Arbeitsstationen 22, wie z.B. einem Kommissionierplatz 18 oder einem Packplatz bzw. einer Packstation 20, verbunden sein. Die Steuerung des Materialflusses wird von einer Steuereinheit 24 übernommen, die eine Recheneinheit 26 aufweist. Die Steuereinheit 24 kann in Form eines zentralen Großrechners oder in Form dezentral verteilter Computer realisiert sein. Die Steuereinheit 24 wird mit Software betrieben, die die Kommissioniersteuerung übernimmt. Zur Kommissioniersteuerung gehören beispielsweise eine Lagerverwaltung, eine Auftragsverwaltung, Kommissionierleitstrategien (wie z.B. Pick-by-Voice, Pick-by-Light, Pick-by-Vision oder Ähnliches), ein Warenwirtschaftssystem und/oder die Lagerverwaltung. Die Lagerverwaltung kann wiederum einen Materialfluss sowie eine Lagerplatzverwaltung regeln. Ferner kann die Kommissioniersteuerung eine Schnittstellenverwaltung umfassen. Die soeben beschriebenen Funktionen werden größtenteils in Form von Soft- und/oder Hardware implementiert. Diese können über einen (oder mehrere) Kommunikationsbus(se) miteinander kommunizieren. Die Auftragsverwaltung sorgt dafür, dass eingehende Kommissionieraufträge zur Abarbeitung an Arbeitsstationen 22, wie z.B. an den Kommissionierplatz 18, verteilt werden. Dabei spielen Faktoren wie Auslastung, Stückgutsortiment, Wegoptimierung und Ähnliches eine Rolle. Um derartige Aufgaben erfüllen zu können, benötigt die Kommissioniersteuerung u.a. Informationen, wie sie exemplarisch im Zusammenhang mit den Fig. 14 und 15 noch beschrieben werden.

Zurückkehrend zu Fig. 1 kommuniziert die Steuereinheit 24 relevante Informationen über feste Leitungen oder drahtlos in beiden Richtungen. In Fig. 1 sind exemplarisch Bewegungssignale 27 als Eingangssignale für die Steuereinheit 24 gezeigt. Ausgangssignale sind exemplarisch in Form von Steuersignalen 28 gezeigt.

In Fig. 2 ist eine Draufsicht auf eine Arbeitsstation 22 gezeigt, die hier exemplarisch als Packstation 20 dargestellt ist. Die Packstation 20 umfasst einen Arbeitsbereich 30, der hier (geometrisch) einer Zelle 31 entspricht. Die Zelle 31 kann größer als der Arbeitsbereich 30 sein und deshalb mehrere Arbeitsbereiche 30 umfassen. Die Zelle 31 bzw. der Arbeitsbereich 30 decken hier z.B. ein Volumen ab, dessen Grundfläche kreisförmig ist, wie es durch eine Strichlinie in der Fig. 2 angedeutet ist. In der Fig. 2 kann die Zelle 31 von einer (nicht dargestellten) Kamera erfasst werden, die entlang einer Achse oberhalb der Packstation 20 positioniert ist, die senkrecht zur Zeichenebene der Fig. 2 durch einen Mittelpunkt 32 des Arbeitsbereichs 30 verläuft. Im Beispiel der Fig. 2 entspricht das Sichtfeld der nicht dargestellten Kamera dem Arbeitsbereich 30.

Im Arbeitsbereich 30 arbeitet eine Kommissionierperson bzw. Bedienperson 34, die nachfolgend auch als Mitarbeiter MA bezeichnet werden wird. Die Bedienperson 34 bewegt sich im Wesentlichen innerhalb des Arbeitsbereichs 30, um Stückgüter 40 von (Lager-) Ladehilfsmitteln 36, wie z.B. Tablaren 38, aufzunehmen bzw. zu entnehmen, die über einen Förderer 14 in den Arbeitsbereich 30 gefördert werden, wie es durch einen Pfeil 39 angedeutet ist. Der Förderer 14 ist in Fig. 2 als Bandförderer realisiert. Es versteht sich, dass jeder andere Fördertyp (z.B. Riemenförderer, Rollenförderer, Hängeförderer, Kettenförderer, etc.) verwendet werden kann.

An der Packstation 20 bewegt (manipuliert) die Bedienperson 34 Stückgüter 40 von den Tablaren 38 z.B. auf eine Auftragspalette 48 oder ein anderes Ziel (Behälter, Karten, Tablar, etc.), wo sie die Stückgüter 40 gemäß einer vorab berechneten Beladungskonfiguration aufeinander stapelt. Dabei kann die Bedienperson 34 (ergonomisch) von einer Ladehilfsvorrichtung 42 unterstützt werden. In der Fig. 2 ist die Ladehilfsvorrichtung 42 in Form eines hüfthoch angebrachten, ergonomisch geformten Bretts 44 realisiert, das zwei im Wesentlichen senkrecht zueinander orientierte Schenkel aufweist, die den Förderer 14 mit einem Packrahmen 50 verbinden. Eine Längsachse des Packrahmens 50 ist vorzugsweise senkrecht zur Längsachse des Förderers 14 orientiert, damit die Bedienperson 34 beim Packen der Stückgüter 40 nicht zu tief (Z-Richtung) über die Auftragspalette 48 greifen muss.

Die Bedienperson 34 bekommt die verschiedenen Manipulationsschritte z.B. über eine Anzeigevorrichtung 52 visuell angezeigt. Die Anzeigevorrichtung 52 kann ein Monitor 54 sein, der mit einer Eingabeeinheit 56 in Form einer Tastatur 58 ausgestattet sein kann. Die Bedienperson 34 kann über den Monitor 54 visuell angezeigt bekommen, wie das Stückgut 40 aussieht (Label, Abmessung, Farbe, etc.), welches die Bedienperson 34 von einem der angedienten Tablare 38 aufnehmen soll und auf die Auftragspalette 48 laden soll. Ferner kann der Bedienperson 34 angezeigt werden, wo sich das aufzunehmende Stückgut 40 auf dem Tablar 38 befindet. Dies ist insbesondere dann von Vorteil, wenn die Tablare 38 nicht sortenrein bestückt sind, d.h. Stückgüter 40 unterschiedlichen Typs tragen. Des Weiteren kann der Bedienperson 34 auch ein Zielbereich auf der Auftragspalette in 3D angezeigt werden, so dass die Bedienperson 34 ein zu packendes Stückgut 40 lediglich vom Tablar 38 zieht, über das Brett 44 zur Auftragspalette 48 schiebt, wie es durch einen (Bewegungs-) Pfeil 46 angedeutet ist, und an einen gemäß einer vorab berechneten Beladekonfiguration vorbestimmten Platz auf dem bereits existierenden Stückgutstapel auf der Auftragspalette 48 ablegt. Der Förderer 14 ist dabei vorzugsweise in einer Höhe angeordnet, so dass die Bedienperson 34 die Stückgüter 40 beim Entnehmen nicht heben muss. Die Auftragspalette 48 kann wiederum auf einer (nicht dargestellten) Hubeinrichtung positioniert sein, um die Auftragspalette 48 in eine derartige Höhe (Y-Richtung) verbringen zu können, dass ein zu packendes Stückgut 50 in den Packrahmen 50 fallengelassen werden kann. Die Packstation 20 kann auf eine Weise aufgebaut sein, wie es in der deutschen Patentanmeldung DE 10 2010 056 520 beschrieben ist, die am 21.12.2010 eingereicht wurde.

Wie es nachfolgend noch detaillierter beschrieben werden wird, ist es möglich, z.B. die Bewegung 46 (Umladen eines Stückguts 40 vom Tablar 38 auf die Auftragspalette 48) - in Echtzeit - zu erfassen, zu überprüfen und den visuellen Arbeitsanweisungen zu überlagern, die die Bedienperson 34 über den Monitor 54 angezeigt bekommt. So können exemplarisch Sollposition oder -bewegungen der Hände der Bedienperson 34 dargestellt werden. Eine übergeordnete Intelligenz, wie z.B. die Steuereinheit 24, kann dann anhand der erfassten und erkannten Bewegung 46 überprüfen, ob die Bewegung 46 richtig ausgeführt wird.

Zumindest der in der realen Welt existierende Arbeitsbereich 30 ist in einer virtuellen (Daten-) Welt mit seinen wesentlichen Komponenten (z.B. Förderer 14, Ladehilfsvorrichtung 42, Packrahmen 50 und Auftragspalette 48) nachgebildet. Bildet man die reale Bewegung 46 in die virtuelle Welt ab, kann man auf einfache Weise durch Vergleich feststellen, ob die Bewegung 46 an einem vorgegebenen Ort (Quellort) begonnen und an einem weiteren vorgegebenen Ort (Zielort) geendet hat. Es versteht sich, dass bei diesem Vergleich ein örtlich und zeitlich diskreter Vergleich bereits ausreicht, um die gewünschten Aussagen treffen zu können. Natürlich können auch Bewegungsabläufe, d.h. die örtliche Position eines Gegenstands in Abhängigkeit von der Zeit, d.h. Trajektorien, miteinander verglichen werden.

Die Bedienperson 34 kann also auf dem Monitor 54 neben den üblichen Kommissionieranweisungen, wie z.B. die zu manipulierende Stückzahl und den Stückguttyp, weitere Informationen mitgeteilt bekommen, die die Qualität und die Geschwindigkeit des Kommissioniervorgangs erhöhen.

Wenn man den Arbeitsbereich 30 z.B. zusätzlich mit einer herkömmlichen (RBG-) Videokamera filmt, können in diesem realen Bild graphische Symbole überlagert werden und angezeigt werden, die dem erwarteten Quellort, dem Zielort (inklusive Orientierung des zu parkenden Stückguts 40) und/oder dem erwarteten Bewegungsablauf entsprechen. Auf diese Weise kann die Bedienperson 34 recht einfach erkennen, ob sie ein Stückgut 40 am richtigen (Quell-) Ort aufnimmt, ob sie das aufgenommene Stückgut 40 richtig bewegt und/oder orientiert (z.B. durch Drehung) oder ob sie das zu packende Stückgut 40 richtig auf dem bereits existierenden Stückgutstapel auf der Auftragspalette 48 positioniert.

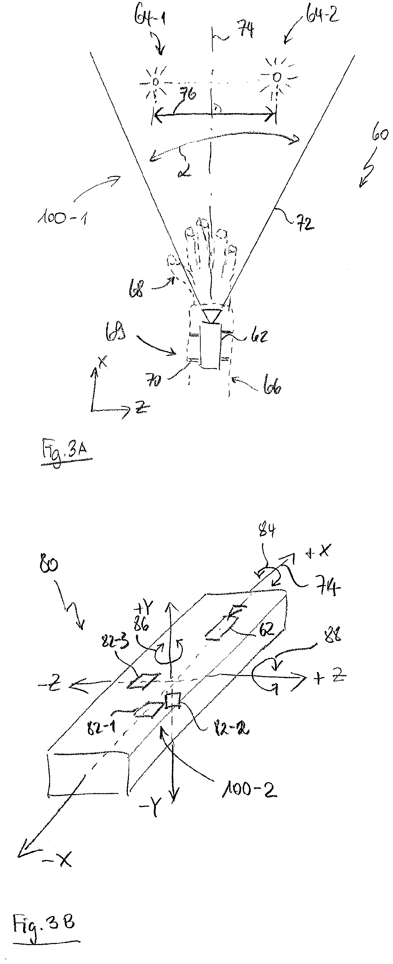

In den Fig. 3A und 3B, die nachfolgend gemeinsam beschrieben werden, ist ein erstes Bewegungssensorsystem 60 inklusive einem ersten absoluten Positionsbestimmungssystem 100-1 (Fig. 3A) und einem zweiten relativen Positionsbestimmungssystem 100-2 (Fig. 3B) gezeigt.

Das Bewegungssensorsystem 60 der Fig. 3A weist eine Kamera 62 und zwei Lichtquellen 64-1 und 64-2 auf, die z.B. im Infrarotbereich betrieben werden, um die Kommissionierperson 34 nicht visuell zu stören. Die Kamera 62 kann an einem Unterarm 66, vorzugsweise entlang der (nicht dargestellten) Elle des Unterarms 66, mit fixer Ausrichtung relativ zur Bedienperson 34 derart angebracht sein, dass die Hand 68 ungestört arbeiten kann. Die Kamera 62 kann an einer Haltevorrichtung 69 befestigt sein, die (Gummi-) Bänder 70 aufweisen kann, so dass die Bedienperson 34 die Kamera 62 ohne Probleme an- und ausziehen sowie entlang einer Vorzugsrichtung 74 ausrichten kann. Das Sichtfeld der Kamera 62 hat einen Kegelwinkel α mit der Vorzugsrichtung 74 als Symmetrieachse. Ein Öffnungskegel ist in Fig. 3A mit 72 bezeichnet.

Die Lichtquellen 64-1 und 64-2 senden ihre Strahlen vorzugsweise isotrop aus. Die Lichtquellen 64-1 und 64-2 sind stationär mit einem konstanten Relativabstand 76 vorzugsweise außerhalb des Arbeitsbereichs 30 angeordnet. Der relative Abstand zwischen den Lichtquellen 64 und der Kamera 62 variiert natürlich, weil sich die Bedienperson 64 bewegt. Der Relativabstand zwischen den Lichtquellen 64 und der Kamera 62 wird aber möglichst so gewählt, dass die Kamera 62 jederzeit beide Lichtquellen 64-1 und 64-2 im Sichtfeld hat. Es versteht sich, dass mehr als zwei Lichtquellen 64 eingesetzt werden können, die dann entlang der virtuellen Verbindungslinie zwischen den Lichtquellen 64-1 und 64-2, vorzugsweise in einem vorgegebenen Muster, angeordnet werden.

Wenn die Kamera 62 auf die Lichtquellen 64 gerichtet ist, kann die Kamera 62 zwei "leuchtende" Punkte erkennen. Da der Relativabstand 76 bekannt ist, kann auf Basis des Abstands der Lichtquellen 64 im Bild der Kamera 62 im Wege einer Triangulation eine absolute Positionsbestimmung durchgeführt werden. Die absolute Positionsbestimmung erfolgt also hier durch Triangulation.

Da es vorkommen kann, dass die Kamera 62 die Lichtquellen 64 entweder gar nicht oder nicht in ausreichender Anzahl "sieht", kann das Positionsbestimmungssystem 100-1 der Fig. 3A um ein weiteres Positionsbestimmungssystem 100-2 ergänzt werden, das Teil einer mobilen Sensoreinheit 80 sein kann, die die Bedienperson 34 fest mit sich trägt.

Die mobile Sensoreinheit 80 der Fig. 3B kann die Kamera 62 der Fig. 3A aufweisen. Das zweite Positionsbestimmungssystem 100-2 weist mehrere Beschleunigungssensoren 82 auf. Im Beispiel der Fig. 3B sind drei Beschleunigungssensoren 82-1, 82-2 und 82-3 gezeigt, wobei zwei Beschleunigungssensoren 82 bereits für eine relative Positionsbestimmung ausreichen würden. Die Beschleunigungssensoren 82 sind entlang des Koordinatensystems der mobilen Sensoreinheit 80 ausgerichtet, das sich wiederum an der Vorzugsrichtung 74 der Kamera 62 orientieren kann.

In der Fig. 3B ist ein kartesisches Koordinatensystem mit den Basisvektoren X, Y und Z gezeigt. Mit dem Beschleunigungssensor 82-1 kann eine Rollbewegung (vgl. Pfeil 84) um die X-Achse erfasst werden. Mit dem Sensor 82-2 kann eine Gierbewegung (vgl. Pfeil 86) um die Y-Achse erfasst werden. Mit dem Beschleunigungssensor 82-3 kann eine Nickbewegung (Pfeil 88) um die Z-Achse erfasst werden.

Aus den Daten, die die Beschleunigungssensoren 82 liefern, kann abgeleitet werden, wie die mobile Sensoreinheit 80 im Raum bewegt wird und bewegt wurde, insbesondere weil die Beschleunigungssensoren 82 auch Bewegungen - in Form von entsprechenden Beschleunigungen - entlang der Basissektoren erfassen können. Sollte es also zu einer Situation kommen, dass die Kamera 62 des ersten Positionsbestimmungssystems 100-1 die Lichtquellen 64 nicht mehr "sieht", kann aufgrund der durch die Beschleunigungssensoren 82 errechenbaren relativen Position selbst die absolute Position der mobilen Sensoreinheit 80 so lange zumindest berechnet werden, bis die Lichtquellen 64 in das Blickfeld der Kamera 62 zurückkehren.

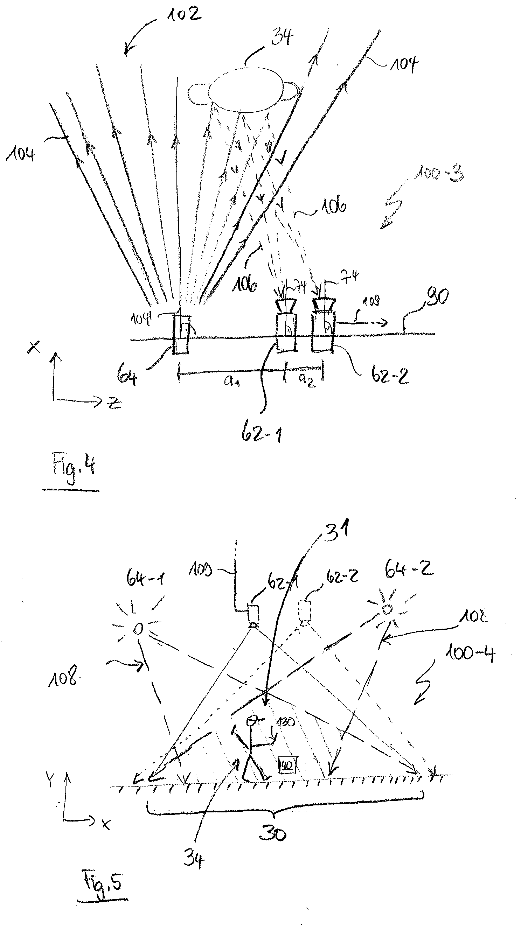

Bezug nehmend auf Fig. 4 ist eine Draufsicht auf ein weiteres (relatives) Positionsbestimmungssystem 100-3 gezeigt. Das dritte Positionsbestimmungssystem 100-3 weist eine Lichtquelle 64 und mindestens zwei Kameras 62-1 und 62-2 auf, die alle entlang einer gedachten Geraden 90 angeordnet sind. Die Abstände a1 und a2 zwischen der Lichtquelle 64 und der ersten Kamera 62-1 sowie zwischen der ersten und zweiten Kamera 62-1 und 62-2 sind bekannt und unveränderlich. Die Lichtquelle 64 sendet ein (anisotropes) Lichtmuster 102 in Form diskreter regelmäßig angeordneter Strahlen 104 aus. Die Strahlen 104 sind vorzugsweise äquidistant, d.h. die Punkte des Musters 102, die auf eine ebene Fläche abgebildet werden, sind gleich beabstandet (und zwar vorzugsweise in horizontaler und vertikaler Richtung), wenn die ebene Fläche senkrecht zur Vorzugsrichtung 104' (d.h. senkrecht zur gedachten Linie 90) orientiert ist.

Die separaten Strahlen 104 können von der Bedienperson 34 im Arbeitsbereich 30 reflektiert werden. Reflektierte Strahlen 106 werden von den Kameras 62-1 und 62-2 erfasst und können auf eine Weise ausgewertet werden, wie sie in der oben zitierten WO-Anmeldung beschrieben ist. Auf diese Weise gewinnt man eine erste Tiefeninformationen aus der Krümmung des Musters 102 an der Bedienperson 34. Weitere Tiefeninformationen können aufgrund von Stereoskopie gewonnen werden, so dass eine Relativposition der Bedienperson 34 berechnet werden kann. Werden weitere Hilfsmittel, wie z.B. Skelett-Modelle, während der Bildverarbeitung eingesetzt, lässt sich eine Relativbewegung der Bedienperson 34 nahezu in Echtzeit (z.B. 300 ms) errechnen, die ausreicht, um entweder zur Bewegungserkennung oder zur Bewegungsüberprüfung zu dienen. Die Auflösung ist ausreichend groß, um zumindest auch isoliert die Bewegung der einzelnen Hände der Bedienperson 34 erkennen zu können.

Das in Fig. 4 gezeigte dritte Positionsbestimmungssystem 100-3 ist passiv in dem Sinne, dass die Bedienperson 34 keine Sensoren mit sich führen muss, um eine (relative) Positionsbestimmung zu ermöglichen. Ein weiteres, passives (relatives) Positionsbestimmungssystem 100-4 ist in der Fig. 5 in einer schematisierten Seitenansicht gezeigt.

Das vierte Positionsbestimmungssystem 100-4 der Fig. 5 weist mindestens eine Kamera 62-1 und mindestens eine Lichtquelle 64 auf. Vorzugsweise werden aber mehrere Lichtquellen 64 eingesetzt, um die Arbeitszelle 31 gut auszuleuchten, damit möglichst von jedem Ort innerhalb der Arbeitszelle 31 ausreichend Reflektionen zur Auswertung des Bilds der Kamera(s) 62 erhalten werden. Die Arbeitszelle 31 ist in Fig. 5 durch den (Raum-) Bereich definiert, der von den beiden Lichtquellen 64-1 und 64-2 sowie von der Kamera 62-1 gemeinsam erfasst wird bzw. ausgeleuchtet wird, wie es durch eine Schraffur angedeutet ist. Die Größe bzw. das Volumen der Arbeitszelle 31 kann durch das Vorsehen von zusätzlichen Kameras 62 und/oder Lichtquellen 64 verändert werden. Der (horizontal orientierte) "Schatten" der Arbeitszelle 31 kann auch kleiner als der Arbeitsbereich 30 sein.

Beim vierten Positionsbestimmungssystem 100-4 senden die Lichtquellen 64-1 und 64-2 isotrope Strahlen 108 aus, die wiederum vorzugsweise im Infrarotbereich liegen und durch Marker 130 reflektiert werden, die die Kommissionierperson 34 an ihrem Körper tragen kann. Über die reflektierten Strahlen werden die Bewegungen der Kommissionierperson 34 erfasst und in ein computerlesbares Format umgewandelt, so dass diese analysiert und auf im Computer generierte 3D-Modelle (virtuelle Welt) übertragen werden können. Selbstverständlich können auch andere Frequenzen als HZ benutzt werden.

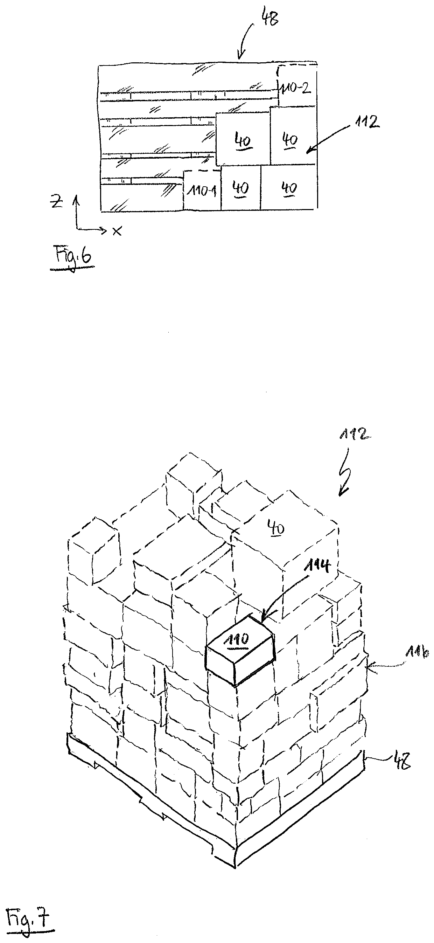

Fig. 6 zeigt eine Draufsicht auf die Palette 48, wie sie die Bedienperson 34 am Packplatz 20 der Fig. 2 sehen kann oder wie sie der Bedienperson 34 auf dem Bildschirm 54 angezeigt werden kann. In der Fig. 6 wurden bereits vier (verschiedene) Stückgüter 40 auf die Auftragspalette 48 geladen. Es versteht sich, dass anstatt einer Palette 48 auch jede andere Form eines Ladehilfsmittels, wie z.B. ein Behälter, ein Karton, ein Tablar oder Ähnliches, benutzt werden kann. Dies gilt für alle Ladehilfsmittel, die im Lager- und Kommissioniersystem 10 zum Einsatz kommen. Des Weiteren sind in der Fig. 6 zwei mögliche Positionen 110-1 und 110-2 für ein Stückgut 40 gezeigt, das als nächstes auf die Auftragspalette 48 zu packen ist. Die möglichen Positionen 110-1 und 110-2 können in der Bildschirmdarstellung überlagert dargestellt werden, so dass die Kommissionierperson 34 nicht selbst überlegen muss, wohin sie das gerade zu packende Stückgut 40 stellt.

In Fig. 7 ist eine perspektivische Darstellung einer ähnlichen Situation wie in Fig. 6 gezeigt. Die Darstellung der Fig. 7 kann der Bedienperson 34 wiederum auf einer Anzeigevorrichtung 52, wie z.B. dem Bildschirm 54 der Fig. 2, angezeigt werden. Alternativ sind auch Anzeigevorrichtungen wie z.B. eine Datenbrille, ein Lichtzeiger oder Ähnliches möglich, um der Bedienperson 34 ein Zielvolumen 114 innerhalb einer Packkonfiguration 112 anzuzeigen. Der aus bereits gepackten Stückgütern 40 bestehende Packstapel 116 ist mit Strichlinien angedeutet. Auf dem Bildschirm 54 können gepackte Stückgüter z.B. in grauer Farbe angezeigt werden, während das Zielvolumen 114 farbig dargestellt wird. Eine derartige visuelle Führung hilft der Bedienperson 34, die mögliche Packposition 110 ohne Schwierigkeiten aufzufinden. Dies gilt auch für die Orientierung des zu packenden Stückguts 40.

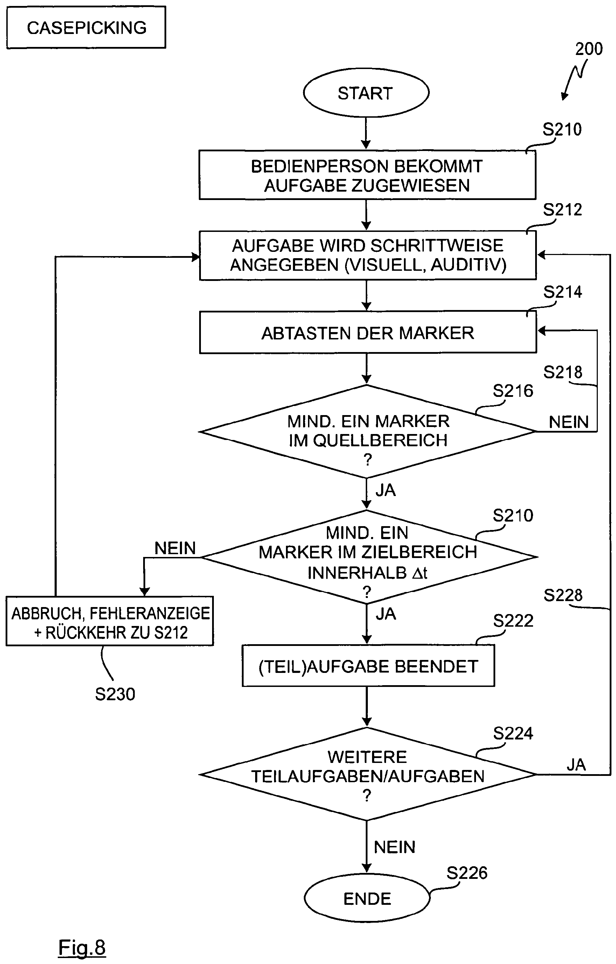

Bezug nehmend auf Fig. 8 ist ein Flussdiagramm gezeigt, das ein Verfahren 200 zum Kommissionieren eines Stückguts 40 repräsentiert.

In einem ersten Schritt S210 wird der Bedienperson 34 eine (Kommissionier-) Aufgabe zugewiesen. Die Kommissionieraufgabe kann aus mehreren sequentiellen Manipulationsschritten bestehen, wie z.B. dem Aufnehmen eines Stückguts 40 von einem Quellort, dem Bewegen des Stückguts 40 zu einem Zielort und dem Abstellen des Stückguts 40 am Zielort.

In einem Schritt S212 wird der Bedienperson 34 visuell und/oder auditiv (Pick-by-Voice) die Aufgabe mitgeteilt. In einem Schritt S214 werden Marker 130 mit einer frei wählbaren Abtastrate abgetastet. In Abhängigkeit davon, ob ein passives oder ein aktives Sensorsystem eingesetzt wird, kann ein Marker 130 auch die Bedienperson 34, eine oder beide Hände 68, ein oder beide Unterarme 66 oder eine reflektierende Folie, aufgeklebte Referenzpunkte, ein Datenhandschuh mit aktiven Sensoren, ein Armstulpen mit aktiven Sensoren oder Ähnliches sein.

In einem Schritt S216 wird beim Kommissionieren oder Umpacken eines Stückguts 40 geprüft, ob mindestens ein Marker 130, z.B. die Hand 68 der Kommissionierperson 34, in einem Quellbereich ist. Der Quellbereich entspricht einem Quellort oder Quellvolumen, wo die Aufnahme eines zu manipulierenden Stückguts 40 erfolgen soll. Dies kann z.B. eine Andienungsposition der Tablare 38 in der Fig. 2 sein. Sobald sichergestellt ist, dass die Bedienperson 34 das zu manipulierende Stückgut 40 gegriffen hat, indem z.B. erfasst und ausgewertet wurde, dass die Hand 68 im Quellbereich ist oder war, wird in einem Schritt S220 abgefragt, ob einer der Marker in einem Zielbereich angekommen ist. Die Ankunft sollte vorzugsweise innerhalb einer vorgegebenen Zeitdauer Δt erfolgen. Wenn das zu manipulierende Stückgut 40 nicht innerhalb der erwarteten Zeitdauer Δt im Zielbereich ankommt, ist die Wahrscheinlichkeit sehr hoch, dass bei der Durchführung des gewünschten Manipulationsvorgangs ein Fehler aufgetreten ist. In diesem Fall kann in einem Schritt S230 der Manipulationsvorgang abgebrochen werden. Ein aufgetretener Fehler kann angezeigt werden, so dass man zum Schritt S212 zurückkehren kann.

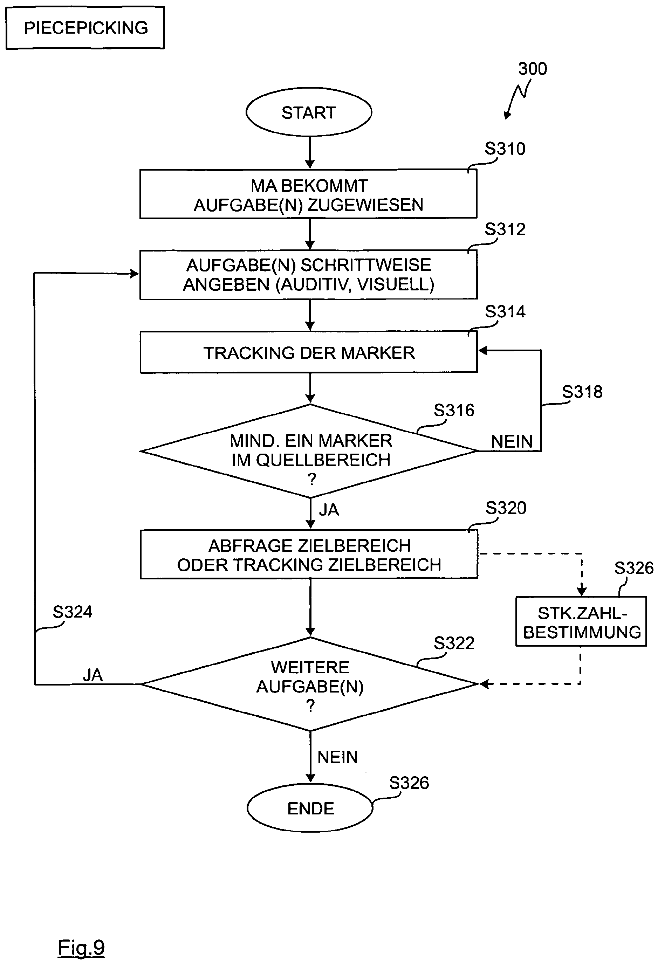

Wenn jedoch der Marker den Zielbereich erreicht, und zwar vorzugsweise innerhalb der vorgegebenen Zeitdauer Δt, ist die entsprechende (Teil-) Aufgabe beendet (vgl. Schritt S222). In einem weiteren Schritt S224 kann abgefragt werden, ob weitere (Teil-) Aufgaben vorliegen. Liegt eine weitere Aufgabe vor, kann in einem Schritt S228 zum Schritt S212 zurückgekehrt werden. Anderenfalls endet das Verfahren im Schritt S226. Zusätzlich können auch Stückzahlen bestimmt werden, wie es nachfolgend unter Bezugnahme auf Fig. 9 noch beschrieben werden wird.

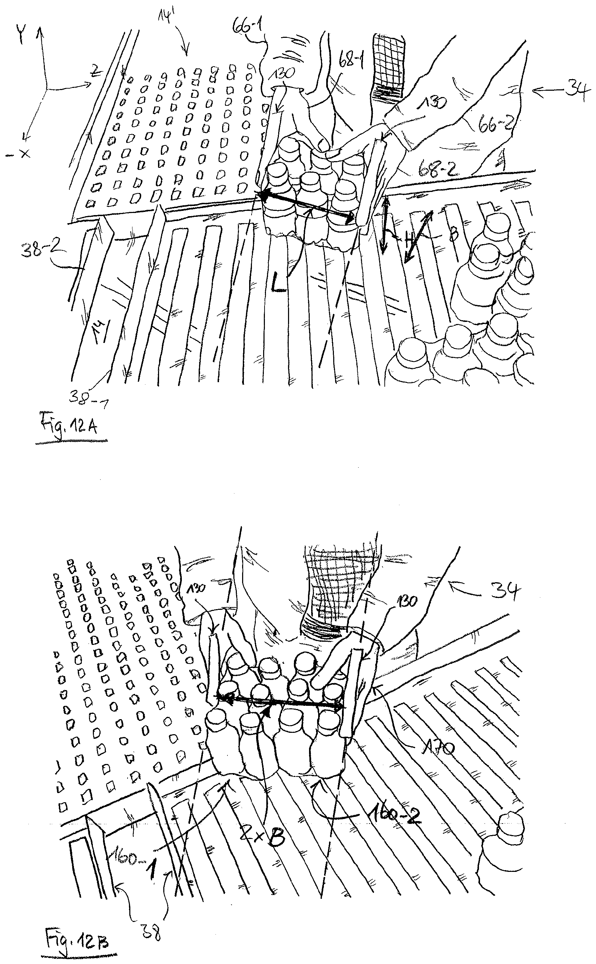

Bezug nehmend auf Fig. 9 ist ein Flussdiagramm gezeigt, das ein Verfahren 300 zum gleichzeitigen Kommissionieren von mehreren Stückgütern 40 zeigt. Rein vorsorglich wird hier darauf hingewiesen, dass unter dem Begriff "Kommissionieren" nicht nur das Zusammenstellen von Stückgütern 40 in Übereinstimmung mit einem (Kommissionier-) Auftrag verstanden wird, sondern z.B. auch ein Umladen von Stückgütern 40, von z.B. einer ersten Fördertechnik auf eine zweite Fördertechnik, wie es im Zusammenhang mit den Fig. 12A und 12B noch näher erläutert werden wird.

Das in der Fig. 9 gezeigte Verfahren 300 ist im Wesentlichen gleich dem Verfahren 200 der Fig. 8 strukturiert. In einem ersten Schritt S310 bekommt ein Mitarbeiter (Bedienperson 34) eine Aufgabe zugewiesen. Im Schritt S312 wird dem Mitarbeiter auditiv und/oder visuell mitgeteilt, was er im Rahmen der Aufgabe zu tun hat. Diese Mitteilung erfolgt gegebenenfalls schrittweise. In einem Schritt S314 werden wiederum die Marker abgetastet (Tracking), um in einem Schritt S316 festzustellen, wann und ob ein Marker im Quellbereich ist. Solange kein Marker im Quellbereich vorhanden ist, wird weiter abgetastet (vgl. Schritt S318).

Wenn der oder die Marker im Quellbereich erfasst wurden, erfolgt wiederum in einem Schritt S320 die Abfrage, wann und ob der oder die Marker den Zielbereich erreicht haben.

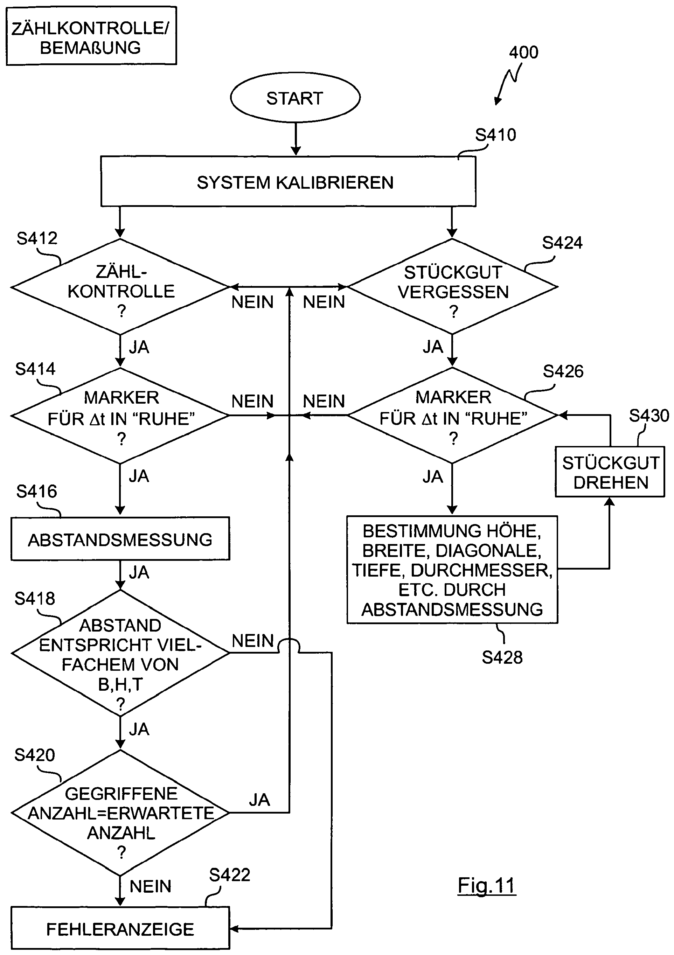

In einem Schritt S326 kann währenddessen, insbesondere während einer Bewegung der Stückgüter 40 vom Quellbereich zum Zielbereich, eine Stückzahlbestimmung durchgeführt werden, die im Zusammenhang mit der Fig. 11 noch genauer beschrieben werden wird.

In einem Schritt S322 kann abgefragt werden, ob weitere Aufgaben durchgeführt werden müssen. Wenn weitere Aufgaben durchgeführt werden müssen, kehrt man in einem Schritt S324 zum Schritt S312 zurück. Anderenfalls endet das Verfahren im Schritt S326.

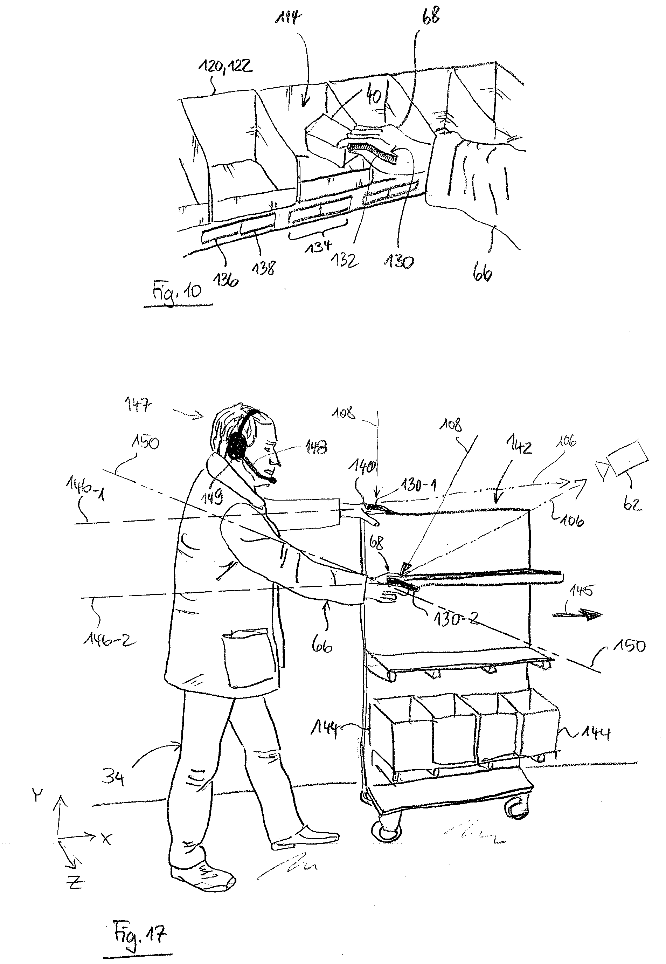

Fig. 10 zeigt eine perspektivische Ansicht eines Puffers für Lagerbehälter 120 oder Auftragsbehälter 122, die hier exemplarisch in Form einer Regalreihe nebeneinander angeordnet sind. Wenn es sich bei den in der Fig. 10 gezeigten Behältern um Auftragsbehälter 122 handelt, so entspricht das Volumen des Auftragsbehälters 122 dem Zielvolumen 114. Wenn es sich bei den Behältern um Lagerbehälter 120 handelt, so entspricht das Volumen der Lagerbehälter 120 einem Quellvolumen.

Die Fig. 10 wird mit einem passiven Bewegungssensorsystem 60 betrieben, wie es exemplarisch in den Fig. 4 oder 5 gezeigt ist. Die Hand 68 der Bedienperson 34 ist mit einem reflektierenden Streifen 132 versehen, der als Marker 130 dient. Der Streifen 132 kann der Bedienperson 34 beispielsweise auf einen ausgestreckten Zeigefinger, vorzugsweise von jeder Hand 68, oder auf einen Datenhandschuh o.Ä. aufgeklebt werden. Der Streifen 32 kann aus einem Material bestehen, das die Strahlen der Lichtquellen 64 besonders gut reflektiert. Um im Beispiel der oben beschriebenen Figuren zu bleiben, könnte der Streifen 132 eine IR-Reflexionsfolie sein. Die entsprechende IR-Kamera 62 würde dann reflektierte IR-Strahlung einer IR-Lichtquelle 64 empfangen. Bei einer geeigneten Wahl der Intensität und Filter sieht die Kamera 62 im Wesentlichen nur den reflektierenden Streifen 132, da die anderen Gegenstände innerhalb des Arbeitsbereichs 30 die IR-Strahlung - im Vergleich zum Streifen 132 - nur schlecht reflektieren.

Des Weiteren ist in der Fig. 10 ein konventionelles Pick-by-Light-Kommissionierleitsystem gezeigt, das Anzeigeeinheiten 134, bestehend aus mindestens einer Ortsanzeige 136 und einer Stückzahlanzeige 138, aufweist.

Im Flussdiagramm der Fig. 11 ist ein Verfahren 400 zur Durchführung einer Zählkontrolle und Vermessung eines Stückguts 40 gezeigt. Generell gilt, dass das Bewegungssensorsystem 60 in einem ersten Schritt - hier im Schritt S410 - kalibriert werden kann. Die Kalibrierung kann z.B. dadurch erfolgen, dass die Bedienperson 34 ihre markierten Hände 68 (vgl. z.B. Fig. 10) im Arbeitsbereich 30 an die Außenseite(n) eines Gegenstands hält, dessen Abmessungen bekannt sind und der deshalb als Maßkörper genutzt werden kann.

Wenn eine Zählkontrolle durchgeführt werden soll (vgl. Abfrage S412), wird in einem Schritt S414 mit einer frei wählbaren Abtastrate abgefragt, ob die Marker 130 für eine Zeitdauer Δt in "Ruhe" sind. In "Ruhe" bedeutet während eines Kommissioniervorgangs z.B., dass sich der Abstand zwischen den Händen für längere Zeit nicht ändert, weil die Bedienperson 34 mehrere Stückgüter 40 gleichzeitig umsetzt, indem die Bedienperson 34 eine derartige Gruppe von Stückgütern 40 seitlich umgreift, wie es im Zusammenhang mit der Fig. 12 noch näher beschrieben werden wird.

Wenn die Marker 130 keinen relativ festen Abstand für eine vorgegebene Zeitdauer aufweisen, werden die Stückgüter 40 momentan wahrscheinlich nicht manipuliert, so dass die Zählkontrolle von vorne beginnt.

Wird jedoch ein Relativabstand für längere Zeit gemessen, so wird dieser Relativabstand in einem Schritt S416 der Zählkontrolle zugrunde gelegt und mit beliebigen Vielfachen der Abmessungen des zu manipulierenden Stückguttyps verglichen. Wenn z.B. quaderförmige Stückgüter 40 manipuliert werden, kann der Relativabstand ein Vielfaches der Breite, der Höhe und/oder der Tiefe eines Stückguts 40 sein. Zwei (sortenreine) Stückgüter 40 können auch so gleichzeitig gegriffen werden, dass der Abstand zwischen den Händen einer Summe aus einer Länge und einer Breite entspricht. Da jedoch bekannt ist, wie viele Stückgüter maximal gerade gleichzeitig manipuliert werden sollen, ist die Menge möglicher Lösungen überschaubar und schnell vergleichbar.

Wenn die manipulierte Anzahl der Stückgüter 40 der erwarteten Anzahl entspricht (vgl. Schritt S420), kann die Zählkontrolle (S412) von vorn beginnen. Ist eine Anzahl von zu manipulierenden Stückgütern 40 zu groß, um auf einmal gegriffen zu werden, kann die Bedienperson 34 dies entweder anzeigen, so dass die Summe von entsprechend mehr Manipulationsvorgängen ausgewertet wird, oder die Kommissioniersteuerung selbst erkennt die Notwendigkeit, den Manipulationsvorgang aufzuteilen.

Wenn die gegriffene Anzahl nicht der erwarteten Anzahl entspricht, wird in einem Schritt S422 ein Fehler angezeigt.

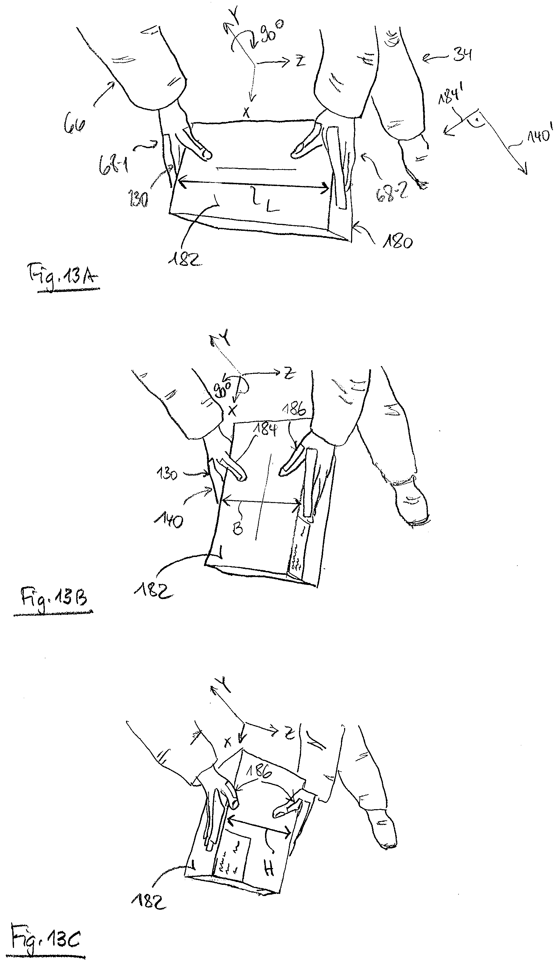

Alternativ zur Zählkontrolle kann ein Stückgut 40 auch vermessen werden, wie es im Zusammenhang mit den Fig. 13A bis 13C noch genauer beschrieben werden wird.

Wenn ein Stückgut 40 vermessen werden soll, wird in einem Schritt S426, ähnlich wie im Schritt S414, geprüft, ob die Marker für eine (kürzere) Zeitdauer Δt in "Ruhe" sind, d.h. einen nahezu konstanten Relativabstand aufweisen.

Auf diese Weise können in einem Schritt S428 die Höhe, Breite, Diagonale, Tiefe, der Durchmesser oder Ähnliches bestimmt werden. Anschließend wird in einem Schritt S430 das Stückgut 40 gedreht, und eine neue Seite des Stückguts 40 wird auf die gleiche Weise vermessen.

Bezug nehmend auf Fig. 12A und 12B werden nachfolgend zwei Beispiele für eine Zählkontrolle gegeben, wie sie im linken Ast des Flussdiagramms der Fig. 11 wiedergegeben ist.

Fig. 12A zeigt eine perspektivische Ansicht einer Arbeitsstation 22, bei der Stückgüter 40 von Tablaren 38, die von einem Förderer 14 transportiert werden, auf einen anderen, senkrecht dazu angeordneten Förderer 14' bewegt werden.

Die Zeigefinger der Kommissionierperson 34 sind jeweils mit einem (aktiven) Marker 130, beispielsweise mit der mobilen Sensoreinheit 80 verbunden, wie sie in Fig. 3B gezeigt ist. Um die Zählkontrolle sicher durchführen zu können, hat die Bedienperson 34 die Anweisung bekommen, die zu manipulierenden Stückgüter 40 (hier Sechser-Träger-Getränkeflaschen) mit beiden Händen 68-1 und 68-2 an sich gegenüberliegenden Seiten zu fassen. Die Längsachsen der Marker 130 liegen dabei nahezu vollständig in den Ebenen der sich gegenüberliegenden Seiten des Stückguts 40. Der Abstand der Längsachsen, die in der Fig. 12a durch Strichlinien angedeutet sind, entspricht einer Länge L eines einzelnen Stückguts 40. Da sich der Abstand zwischen den Händen 68-1 und 68-2 während einer Umsetzbewegung des Stückguts 40 vom Tablar 38-1 in Richtung des weiteren Förderers 14-2 nahezu nicht verändert, kann die Abstandsbestimmung auch während dieses Bewegungsvorgangs bestimmt und überprüft werden.

In Fig. 12B ist eine Situation gezeigt, bei der die Bedienperson 34 zwei Stückgüter 40 gleichzeitig greift und bewegt. Die Bedienperson 34 greift die Stückgüter 40 dabei so, dass der Abstand zwischen ihren Händen dem Doppelten einer Breite B der Stückgüter 40 entspricht. Dieser Abstand wird erfasst und ausgewertet.

Bezug nehmend auf die Fig. 13A bis 13C ist ein exemplarischer Ablauf eines Vermessungsvorgangs in Form von drei Momentaufnahmen gezeigt, wie er in Fig. 11 beschrieben wurde.

Ergänzend zu den Markern 130, die an den Zeigefingern 140 angebracht sind, sind auch die Daumen 184 mit einem jeweils weiteren Marker 186 versehen. Hierbei kann es sich wiederum um eine mobile Sensoreinheit 80 der Fig. 3B handeln. Die Kommissionierperson 34 kann vorab angewiesen werden, beim Vermessen eines unbemaßten Stückguts 180 den Zeigefinger 140 und den Daumen 184 in einem vorzugsweise rechten Winkel abzuspreizen, wie es durch die Hilfspfeile 184' und 140' in Fig. 13A angedeutet ist. Der Daumen 184 und der Zeigefinger 140 spannen eine Ebene auf, die beim Auswerten der Abstände und somit beim Bestimmen der Abmessungen des unbemaßten Stückguts 180 benutzt werden können. So können z.B. die Orientierungen von Außenflächen, wie beispielsweise der Oberseite 182 des unbemaßten Stückguts 180, oder Winkel durch Anlegen des Daumens 184 und des Zeigefingers 140 an die entsprechende Stückgutkante bestimmt werden.

In der Fig. 13A wird eine Länge L durch den Relativabstand der Zeigefinger 140 bestimmt. Anschließend wird das unbemaßte Stückgut 180 um 90° um die Y-Achse gedreht, um die Breite B zu bestimmen, wie es in der Fig. 13B gezeigt ist. Eine weitere Drehung um 90° um die X-Achse resultiert in der Orientierung, wie sie in Fig. 13C gezeigt ist. In der Fig. 13C wird die Höhe H bzw. die Tiefe T bestimmt.

Das in den Fig. 13A bis 13C gezeigte, zu bemaßende Stückgut 180 ist quaderförmig. Andere Formen (z.B. Kugel, Tetraeder, etc.) können auf die gleiche Art und Weise bestimmt werden, wobei die Kommissionierperson 34 vorab eine bereits hinterlegte Formkategorie auswählt (z.B. Kugel) und von der Steuereinheit 26 anschließend mitgeteilt bekommt, welche Länge zu messen ist (z.B. der Durchmesser).

Die in den Fig. 13A bis 13C gezeigte Art des Vermessens eines unbemaßten Stückguts 180 kann weiter vereinfacht werden, wenn man das Stückgut 180 während des Messvorgangs auf einer fest im Raum definierten Fläche (z.B. Arbeitstisch) positioniert. Der Arbeitstisch kann stationär oder auch mobil ausgeführt sein. In oben genannten Fall kann es ausreichen, wenn man beispielsweise bei einem Quader die abgespreizten Daumen und Zeigefinger einer jeden Hand entlang einer Diagonalen der Oberseite 182 ausrichtet, wobei die Zeigefinger entlang der jeweiligen vertikalen Eckkante angelegt werden. Aus dem Abstand der Zeigefinger kann man die Länge der Diagonalen bestimmen. Aus dem Abstand der Daumen zur Arbeitsfläche kann man die Höhe des Stückguts 180 bestimmen. Aus der Geometrie des Quaders und der Länge der Diagonalen kann man wiederum die Länge und die Breite des Stückguts 180 bestimmen. In diesem Fall kann man also die Abmessungen des quaderförmigen Stückguts 180 durch einmaliges "Handanlegen" bestimmen. Ähnliches ist für andere Geometrien des Stückguts 180 möglich.

In Fig. 14 ist eine Tabelle 500 gezeigt, die eine Vielzahl von Datensätzen 104 für verschiedene Stückgüter (1 bis N) in einer mit der Steuereinheit 24 verbundenen Datenbank repräsentiert. Die Datensätze 504 können eine Vielzahl von Attributen 502, wie z.B. einen Lagerort, die Höhe, Breite und Tiefe, einen Durchmesser, eine Länge einer Diagonalen, das Gewicht, eine gelagerte Stückzahl und Ähnliches aufweisen. Die Datensätze 504 können durch das eben beschriebene Messverfahren vervollständigt werden, wenn z.B. die Abmessungen des Stückguts 180 unbekannt sind. Die Datensätze 504 können aber auch zum Zwecke einer Lagerverwaltung (siehe Lagerort) und einer Warenwirtschaft (Stückzahl/Inventur) genutzt werden.

In Fig. 15 ist eine weitere Tabelle 550 mit Datensätzen 552 gezeigt. Die Datensätze 552 stellen Protokolle für jeden Mitarbeiter MA bzw. jede Bedienperson 34 dar. In den Datensätzen 552 können verschiedene Informationen zu den Bedienpersonen 34 hinterlegt werden. In einem Datenfeld 506 kann eine Gesamtarbeitszeit hinterlegt werden. In einem weiteren Datenfeld kann die Zelle 31 bzw. die Arbeitsstation 22 hinterlegt werden, in der der Mitarbeiter arbeitet oder gearbeitet hat (Historie). Es versteht sich, dass bei einem Arbeitszellen- oder Arbeitsstationswechsel die Daten entsprechend aufgeschlüsselt werden können. Des Weiteren kann hinterlegt werden, welches Gesamtgewicht die Bedienperson 34 bisher gehoben hat. Dazu summiert man die Gewichte der Stückgüter und multipliziert sie ggf. mit dem jeweiligen Hub, wobei der Hub aus den erfassten und ausgewerteten Bewegungen oder Positionen abgeleitet wird. Natürlich kann auch die Menge der gehobenen Gewichte allein aufsummiert werden, insbesondere, um die Bedienperson 34 auszuwechseln, wenn sie eine zulässige Gesamtlast (Gewicht/Tag) vorzeitig erreicht. Analoges gilt für das Gewicht der Stückgüter, die die Bedienperson 34 im Laufe ihrer Arbeitsschicht geschoben hat.

Arbeiten mehrere Bedienpersonen 34 innerhalb des Systems 10, können die Marker 130 mit individualisierenden Merkmalen ausgestattet sein, so dass eine Zuordnung des oder der Marker 130 zur jeweiligen Bedienperson 34 möglich ist. In diesem Fall wird auch eine Markernummer hinterlegt.

Der erste Datensatz 552 für den Mitarbeiter MAI bringt zum Ausdruck, dass dieser Mitarbeiter bereits seit drei Stunden und sechzehn Minuten in der Arbeitszelle Nr. 13 arbeitet und dabei ein Gesamtgewicht von 1352 kg um einen Meter gehoben hat, sowie ein Gesamtgewicht von 542,3 kg um einen Meter verschoben hat. Dem Mitarbeiter MAI ist das Markerpaar Nr. 1 zugeordnet. Der Mitarbeiter MAi hat sechzehn Minuten in der Arbeitszelle Nr. 12, eine Stunde und zwölf Minuten in der Arbeitszelle Nr. 14 und anschließend wieder fünf Minuten in der Arbeitszelle Nr. 12 gearbeitet. Dabei hat er insgesamt ein Gewicht von 637,1 kg (um einen Meter) gehoben sowie 213,52 kg um einen Meter geschoben. Dem Mitarbeiter MA i ist das Markerpaar mit der Nummer i zugeordnet. Die so generierten Daten können für vielfältige Zwecke (Behindertenüberwachung, ergonomische Überwachung, Gesundheitsüberwachung, Diebstahlsicherung, Werkzeugausgabe-Überwachung, Verfolgung von Arbeits- und Pausenzeit, etc).

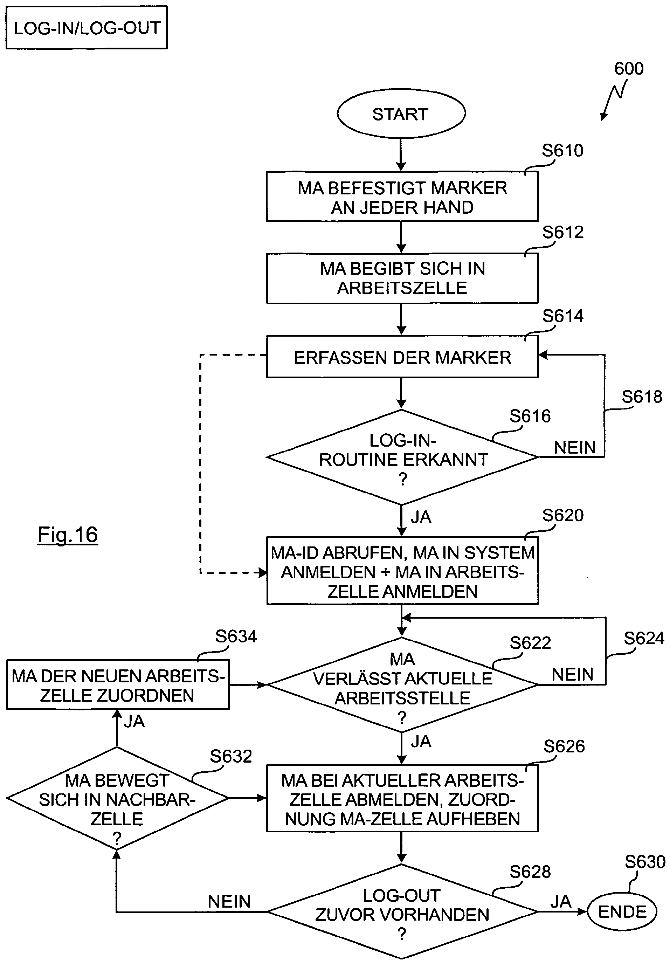

Bezug nehmend auf Fig. 16 ist ein Flussdiagramm für ein Log-in-Verfahren 600 gezeigt. In einem ersten Schritt S610 befestigt sich der Mitarbeiter MA einen oder mehrere Marker 130, beispielsweise einen an jeder Hand 68. In einem Schritt S612 begibt sich der Mitarbeiter 34 in eine der Arbeitszellen 31, um an einer der Arbeitsstationen 22 zu arbeiten. Sobald die Marker 130 im Schritt S614 erfasst sind, kann mit der Erkennung einer Log-in-Routine im Schritt S616 begonnen werden.

Sobald die Marker 130 im Schritt S614 erfasst sind, kann entweder eine Log-in-Sequenz abgefragt werden (Schritt S616) oder automatisiert eine Mitarbeiteridentifikationsnummer abgerufen werden (Schritt S620), woraufhin der Mitarbeiter MA im System (Kommissioniersteuerung) in der entsprechenden Zelle 31 bzw. im Arbeitsbereich 30 angemeldet wird. Wenn der Mitarbeiter MA eine aktuelle Zelle 31 verlässt, wird dies durch die Abfrage im Schritt S622 erfasst, woraufhin im Schritt S626 der Mitarbeiter MA in der aktuellen Zelle 31 abgemeldet wird, so dass die Zuordnung Mitarbeiter-Zelle aufgehoben wird. Solange sich der Mitarbeiter 34 in der Zelle 31 aufhält (Schritt S624), bleibt er in der aktuellen Zelle 31 angemeldet, und die Zuordnung zu dieser Zelle 31 bleibt erhalten. In einem Schritt S628 kann dann abgefragt werden, ob sich der Mitarbeiter MA abgemeldet hat, indem er z.B. mit seinen Händen eine Log-out-Geste innerhalb der aktuellen Zelle 31 durchgeführt hat. Wenn er eine Log-out-Geste durchgeführt hat, endet das Verfahren im Schritt S630. Andernfalls wird in einem Schritt S632 abgefragt, ob sich der Mitarbeiter 34 in eine angrenzende Nachbarzelle 31 bewegt hat. In diesem Fall werden die Marker 130 des Mitarbeiters 34 in der Nachbarzelle 31 erfasst, so dass der Mitarbeiter 34 in einem Schritt S634 der neuen Arbeitszelle 31 zugeordnet werden kann. Anschließend wird wiederum im Schritt S622 zyklisch abgefragt, ob der Mitarbeiter 34 die (neue) aktuelle Zelle 31 verlassen hat. Die Kommissioniersteuerung hat Kenntnis von der relativen Anordnung der Zellen 31. Aus den Bewegungen des Mitarbeiters MA kann bestimmt werden, zwischen welchen Zellen/Arbeitsbereichen der MA gewechselt hat.

Die Bewegungen des Mitarbeiters 34 werden also nicht nur innerhalb des Arbeitsbereichs 30 bzw. einer einzigen Zelle 31 erfasst und ausgewertet, sondern auch in den Fällen, wenn der Mitarbeiter 34 die Bereiche 30/Zellen 31 wechselt. Das Lager- und Kommissioniersystem 10 weist vorzugsweise eine Vielzahl von aneinandergrenzenden Zellen 31 auf. Die Zellen 31 können natürlich auch entfernt zueinander angeordnet sein. Auf diese Weise ist es möglich, Aufgaben zu erledigen, die sich über mehrere Zellen 31 bzw. weitere Distanzen innerhalb des Lager- und Kommissioniersystems 10 erstrecken ("Mann-zur-Ware").

Beim Kommissionieren nach dem Prinzip "Mann-zur-Ware" kann es vorkommen, dass die Bedienperson 34 mit einem Kommissionierwagen 142 durch die Gänge eines Lagers 12 läuft, um gleichzeitig mehrere Aufträge parallel abzuarbeiten (einzusammeln). Zu diesem Zweck führt die Bedienperson 34 mehrere Auftragsbehälter 122 im Kommissionierwagen 142 mit sich. Eine derartige Situation ist in der perspektivischen Darstellung der Fig. 17 gezeigt. Während eines Kommissioniergangs durch z.B. Regalgassen des Lagers 12 kann die Bedienperson 34 mehrere Zellen 31 passieren, die vorzugsweise aneinandergrenzend bzw. überlappend angeordnet sind.

In Fig. 17 läuft die Bedienperson 34 mit dem Kommissionierwagen 142 durch das Lager 12, wie es durch einen Pfeil 145 angedeutet ist. Auf dem Kommissionierwagen 142 sind mehrere Sammelbehälter 144 angeordnet, in welche die Bedienperson 34 gegriffene Stückgüter abgibt. Die Bedienperson 34 hat z.B. an den Zeigefingern 140 ihrer Hände 68 jeweils einen Marker 130-1 bzw. 130-2 befestigt. Die Bedienperson 34 kann zusätzlich mit einem Headset 147 ausgestattet sein, das ein Mikrofon 148 und einen Kopfhörer 149 aufweist. Über das Headset 147 kann die Bedienperson 34 mit dem Kommissionier(leit)system per Sprache kommunizieren (Pick-by-Voice). Die Bedienperson 34 bekommt dann eine zu entnehmende Stückzahl, den Lagerort und das Stückgut angesagt (mitgeteilt).

Die Bewegung der Bedienperson 34 bzw. ihrer Zeigefinger 140 wird von einer Kamera 62 aufgenommen, die z.B. im Infrarotbereich arbeitet. Nicht dargestellte Lichtquellen 64 senden von der Decke des Lagers 12 isotrop Infrarotstrahlen 108 aus, die von den Markern 130 reflektiert werden, wie es durch strichpunktierte Pfeile 106 angedeutet ist. Wenn die Bedienperson 34 durch das Lager 12 läuft, beschreiben die Zeigefinger 140 die durch Strichlinien angedeuteten Bewegungsbahnen (Trajektorien) 146-1 und 146-2. Bei den Bewegungsbahnen 146 handelt es sich um Punkte, die sich mit der Abtastrate der Kamera 62 im Raum bewegen.

Alternativ zur eben beschriebenen, passiven Bewegungsverfolgung kann auch eine aktive Bewegungsverfolgung durchgeführt werden, indem z.B. mobile Sensoreinheiten 80 als Marker 130 eingesetzt werden. An der rechten Hand 68 der Bedienperson 34 ist mit Hilfe einer Strichlinie 150 angedeutet, in welche Richtung der Zeigefinger 140 deutet. Auch in diesem Fall können Bewegungsbahnen 146 aufgezeichnet und ausgewertet werden.

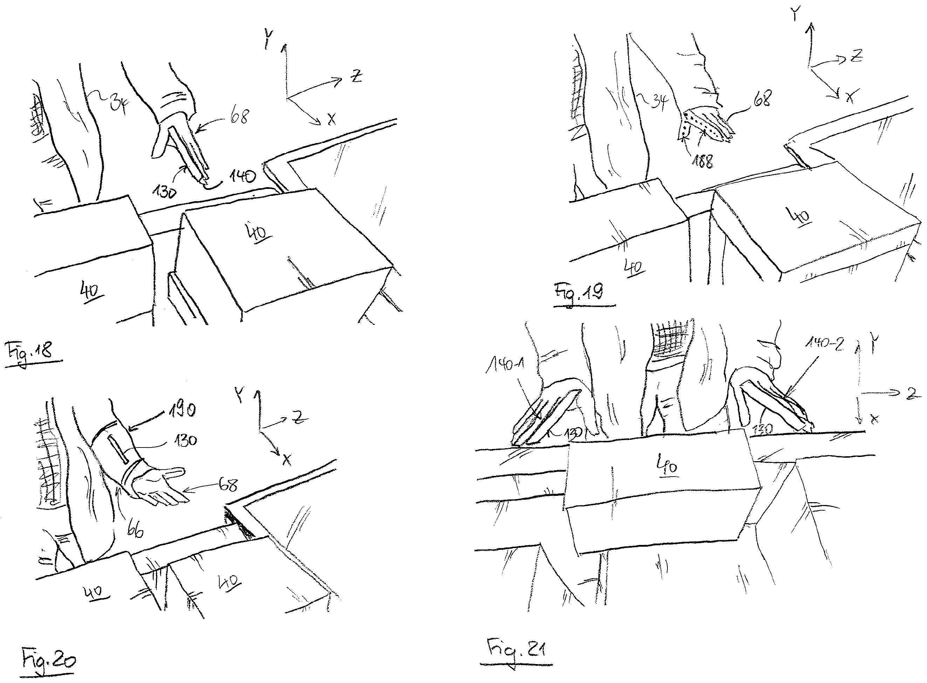

Unter Bezugnahme auf die Darstellungen der Fig. 18 bis 21 werden verschiedene Gesten beschrieben werden, die mittels des Bewegungssensorsystems 60 erkannt und von der Recheneinheit 26 ausgewertet werden, um bestimmte Vorgänge im Lager- und Kommissioniersystem 10 auszulösen. Die Fig. 18 bis 21 zeigen perspektivische Darstellungen von exemplarischen Gesten am Packplatz 20 der Fig. 2.

In der Fig. 18 ist der Befehl "Auftragspalette absenken" gezeigt. Die Hand 68 der Bedienperson 34, und insbesondere der Zeigefinger 140 mit dem daran angebrachten Marker 130, ist leicht in Richtung des Fußbodens geneigt und verharrt für eine kurze Zeitdauer in dieser Stellung. Die Recheneinheit 26 erkennt, dass sich die Hand 68 außerhalb jedes möglichen Zielvolumens 114 befindet. Die Hand 68 befindet sich auch nicht im Bereich eines Quellvolumens, sondern verharrt außerhalb dieser signifikanten Bereiche in Ruhe. Des Weiteren kann der Zeigefinger 140 - und somit auch der Marker 130 - leicht nach unten gerichtet sein. Durch einen Vergleich dieser (statischen) Geste mit einer Vielzahl von fest definierten, hinterlegten Referenz-Gesten (inklusive entsprechender Toleranzen) ist die Recheneinheit 26 in der Lage, den Befehl "Auftragspalette absenken" eindeutig zu erkennen. In diesem Fall erzeugt die Recheneinheit 26 einen Steuerbefehl 28, der an die Hubeinrichtung innerhalb des Packrahmens 50 gerichtet wird, so dass sich die Hubeinrichtung absenkt.

In der Fig. 19 wird ein anderes Positionsbestimmungssystem 100 als in der Fig. 18 eingesetzt. Die Bedienperson 34 trägt an vorzugsweise jeder Hand 68 einen Handschuh, an dessen Zeigefinger und Daumen eine Vielzahl von punktförmigen Reflektoren 188 angeordnet sind, die bei ausgestrecktem Zeigefinger 140 und ausgestrecktem Daumen 184 jeweils entlang einer Geraden angeordnet sind.

Die Fig. 19 dient zur Veranschaulichung des Befehls "Auftragspalette stoppen", wie er im Anschluss an den in der Fig. 18 angedeuteten Befehl "Auftragspalette absenken" in unmittelbarer Folge durchgeführt werden kann, um das Absenken der Auftragspalette zu beenden. Bei der in der Fig. 19 dargestellten Geste werden der Daumen 184 und der Zeigefinger 140 in einem vorzugsweise rechten Winkel voneinander abgespreizt. Der Daumen 184 erstreckt sich entlang der Vertikalen. Der Zeigefinger 140 erstreckt sich entlang einer Horizontalen. Alternativ könnten die Finger zuerst parallel ausgerichtet werden und dann in eine Winkelstellung von im Wesentlichen 90° bewegt werden.

Fig. 20 dient zur Veranschaulichung des Befehls "Auftragspalette anheben", wobei alternativ eine Armstulpe 190 inklusive Marker 130 zum Einsatz kommt, die eine nach oben gerichtete Aufwärtsbewegung der geöffneten Handfläche der Hand 68 erkennt. In diesem Fall handelt es sich um eine dynamische Geste, wobei der Unterarm 66 anfänglich nach unten hängt und danach in die Horizontale bewegt wird.

Die in Fig. 21 dargestellte (statische) Geste, bei der die Zeigefinger 140-1 und 140-2 in eine V-förmige Stellung außerhalb eines Bereichs der Auftragspalette 48 gebracht werden und dort für eine (kurze) Zeitdauer Δt in dieser Stellung verharren, dient zur Veranschaulichung eines Quittiervorgangs, d.h. der Anzeige eines Abschlusses eines Manipulationsvorgangs. In diesem Fall hat die Bedienperson 34 ihre Hände aus dem Gefahrenbereich herausbewegt. Die Recheneinheit 26 registriert wiederum, dass die Hände 68 sich außerhalb der Quell- und Zielvolumina befinden, und registriert zusätzlich die V-förmige statische Geste. Wenn die Auftragspalette 48 fertig beladen ist, kann diese Geste zu einem Palettenwechsel führen. Anderenfalls kann durch diese Geste auch ein Tablarwechsel initiiert werden, so dass ein neues zu entladendes Tablar 38 über den Förderer 14 (vgl. Fig. 2) in den Quellbereich transportiert wird, so dass die Bedienperson 34 sofort mit der Abarbeitung des nächsten Manipulationsschritts beginnen kann, der Teil der Abarbeitung eines Kommissionierauftrags ist.

Es versteht sich, dass die Recheneinheit 26 sowohl (statische) Positionen als auch dynamische Bewegungsabläufe für die Bewertung einer Situation (Geste) auswerten und umsetzen kann.

Bei der oben stehenden Beschreibung der Figuren wurde sich bei der Wahl der Orientierung der Koordinatensysteme generell an die in der (Intra-) Logistik übliche Bezeichnung gehalten, so dass die Längsrichtung eines Regals mit X, die Tiefe des Regals mit Z und die (vertikale) Höhe des Regals mit Y bezeichnet wurde. Dies gilt analog für das System 10.

Des Weiteren wurden gleiche Teile und Merkmale mit den gleichen Bezugsziffern versehen. Die in der Beschreibung enthaltenen Offenbarungen sind sinngemäß auf gleiche Teile und Merkmale mit denselben Bezugszeichen übertragbar. Lage- und Orientierungsangaben (z.B. "oben", "unten", "seitlich", "längs", "quer", "horizontal", "vertikal" oder dergleichen) sind auf die unmittelbar beschriebene Figur bezogen. Bei einer Änderung der Lage oder Orientierung sind die Angaben aber sinngemäß auf die neue Lage bzw. Orientierung zu übertragen.

Ferner versteht es sich, dass die im Zusammenhang mit den Fig. 18 bis 21 erwähnten Gesten selbstverständlich auf jede Art von Steuerungsbefehl angewendet werden können. Schalter, Taster und Knöpfe lassen sich durch diese Art von Gesten vollständig eliminieren. Lichtschranken und andere Sicherheitsmerkmale, die heutzutage in der Intralogistik eingesetzt werden, um die Sicherheitsvorschriften zu erfüllen, werden ebenfalls überflüssig, da die Bewegung der Bedienperson 34 in Echtzeit im Raum verfolgt wird. Die Recheneinheit 26 kann z.B. aus der Richtung einer gerade durchgeführten Bewegung auch vorhersagen, ob sich die Bedienperson 34 in (naher) Zukunft in einen Sicherheitsbereich hinein bewegen wird, und in diesem Fall vorsorglich eine Maschine vorzeitig abschalten. Dadurch verringert sich nicht nur der Einsatz von Sensorik, sondern auch die Verkabelung innerhalb des Lager- und Kommissioniersystems 10. Tablar- oder Behälterwechsel können automatisiert eingeleitet werden. Zählkontrollen können automatisiert durchgeführt werden. Eine Vermessung von Gegenständen kann durch bloßes Handanlagen erledigt werden. Eine Bedienerführung erfolgt visuell und in Echtzeit. Ergonomische Aspekte können ausreichend berücksichtigt werden, indem Belastungen der Bedienperson 34 automatisch mitverfolgt werden.

## Patentansprüche

1. Verfahren zum Steuern eines Lager- und Kommissioniersystems, wobei das Lager- und Kommissioniersystem aufweist: eine manuelle Arbeitsstation (22), die ein Packplatz (20) ist, mit einem definierten Arbeitsbereich (30), in welchem eine Bedienperson (34) ein Stückgut (40) mit ihren Händen (68) auf eine vorgegebene Weise gemäß einer Kommissionier-Aufgabe, die der Bedienperson (34) visuell und/oder auditiv mitgeteilt wird, manipulieren soll, indem die Bedienperson (34) das Stückgut (40) innerhalb des Arbeitsbereichs (30) von einem Quellort aufnimmt, bewegt und an einen Zielort auf eine Auftragspalette (48) abgibt, die innerhalb eines Packrahmens (50) auf einer Hubeinrichtung positioniert ist; ein Bewegungssensorsystem (60), das Bewegungen (46; 146) der Hände (68) und/oder Arme (66) der Bedienperson (34) im Arbeitsbereich (30) der Arbeitsstation (22) erfasst und in entsprechende Bewegungssignale (27) umwandelt; und eine Recheneinheit (26), die datentechnisch mit dem Bewegungssensorsystem (60) verbunden ist und die eingerichtet ist, die Bewegungssignale (27) in entsprechende zeitabhängige, Trajektorien in einer virtuellen Welt umzuwandeln, die eine Abbildung des Arbeitsbereichs (30) ist und wo die Trajektorien mit Referenz-Trajektorien verglichen werden, um Steuersignale (28) als Arbeitsbereich-Steuerbefehle zu erzeugen und auszugeben, mit den Schritten:
- Abtasten der tatsächlichen Bewegung der Arme und/oder Hände der Bedienperson in der realen Welt mittels des Bewegungssenorsystems und Umwandeln in mindestens eine entsprechende Trajektorie in der virtuellen Welt mittels der Recheneinheit (26);
- mittels der Recheneinheit (26):
Vergleichen der Trajektorie mit Referenzgesten, die in der virtuellen Welt erzeugt werden und die auf einen Satz von definierten Gesten referenzieren, die jeweils einer eindeutigen Bewegung oder Ruhestellung der Arme und/oder der Hände der Bedienperson entsprechen und die sich jeweils hinreichend von normalen Bewegungen unterscheiden, die im Zusammenhang mit gewünschten Manipulationen des Stückguts im Arbeitsbereich stehen, wobei jeder Referenzgeste mindestens ein Arbeitsbereich-Steuerbefehl zugeordnet ist;
Erzeugen des zugeordneten Arbeitsbereich-Steuerbefehls, wenn der Vergleich eine hinreichende Überstimmung ergibt, und
Richten des erzeugten zugeordneten Arbeitsbereich-Steuerbefehls an die Hubeinrichtung; und
- Ausführen des zugeordneten Arbeitsbereich-Steuerbefehls durch die Hubeinrichtung,
wobei der Arbeitsbereich-Steuerbefehl (28) veranlasst, dass sich die Hubeinrichtung absenkt, dass ein Absenken der Auftragspalette beendet wird, dass die Auftragspalette angehoben wird oder dass die Auftragspalette gewechselt wird, wenn die Auftragspalette (48) fertig beladen ist.

2. Verfahren (600) nach Anspruch 1, wobei sich die Bedienperson bei einer übergeordneten Steuerungseinheit (24) anmeldet (S620), sobald die Bedienperson erstmals eine Arbeitszelle (31) betritt (S612).

3. Verfahren nach Anspruch 2, wobei sich die Bedienperson (34) an jeder Hand (68) und/oder an jedem Unterarm (66) mindestens einen Marker (130) befestigt (S610), bevor sie die Arbeitszelle (31) betritt.

4. Verfahren nach Anspruch 3, wobei die Bedienperson (34), und insbesondere die Marker (130), permanent abgetastet werden (S616), um eine Log-In-Geste zu erkennen.

5. Verfahren nach einem der Ansprüche 1 bis 4, wobei die jeweiligen Schritte in Echtzeit ausgeführt werden.

6. Verfahren nach einem der Ansprüche 1 bis 5, wobei in einem ersten Schritt eine Positionskalibrierung durchgeführt wird (S410).

7. Verfahren nach einem der Ansprüche 1 bis 6, wobei die Trajektorien der Bedienperson gespeichert und datentechnisch mit Informationen zu solchen Stückgütern verknüpft werden, die die Bedienperson während einer Arbeitsschicht bewegt hat, wobei insbesondere eine Arbeitsdauer, ein Bewegungsweg in horizontaler und vertikaler Richtung und ein Gewicht für jedes bewegte Stückgut berücksichtigt werden.

8. Verfahren nach einem der Ansprüche 1 bis 7, wobei zusätzlich ein Videobild des Arbeitsbereichs erzeugt wird, dem das Quellvolumen, das Zielvolumen, die abgetasteten Hände, die abgetasteten Arme und/oder die abgetastete Bedienperson überlagert und anschließend der Bedienperson über eine Anzeigevorrichtung in Echtzeit angezeigt wird.

9. Verfahren nach einem der Ansprüche 1 bis 8, wobei das Bewegungssensorsystem (60) ein Positionsbestimmungssystem (100-3, 100-4) aufweist, das mindestens eine stationäre Lichtquelle (64-1, 64-2) und mindestens eine stationäre Kamera (62-1, 62-2) aufweist, wobei jede Lichtquelle (64) den Arbeitsbereich (30) ausleuchtet, wobei die mindestens eine stationäre Kamera (62) so angeordnet ist, dass sie zumindest einige Strahlen (106) erfasst, die von der Bedienperson (34) reflektiert werden und die die mindestens eine stationäre Kamera (62) in Reflexionssignale (109) umwandelt, wobei die Recheneinheit (26) eingerichtet ist, basierend auf den Reflexionssignalen (109) eine relative Positionsbestimmung für die Bedienperson (34) innerhalb des Arbeitsbereichs (30) durchzuführen.

10. Verfahren nach Anspruch 9, wobei das Positionsbestimmungssystem (100-4) ferner Marker (130) aufweist, wobei jede Hand (68) und/oder jeder Arm (66) der Bedienperson (34) mit einem der Marker (130) mit unveränderlicher, vorgegebener Ausrichtung relativ zur Bedienperson (34) lösbar verbunden ist, und wobei die mindestens eine stationäre Lichtquelle (64) homogene Strahlen (108) mit einer ausgewählten Wellenlänge in den Arbeitsbereich (30) aussendet, die von der Bedienperson (34), dem Stückgut (40) und der Arbeitsstation (22) gar nicht oder nur schwach reflektiert werden, wobei der Marker (130) aus einem Material gebildet ist, das die ausgewählte Wellenlänge besonders stark reflektiert.

11. Verfahren nach Anspruch 10, wobei die Marker (130) längliche, flexible Streifen (132) oder rasterförmig anbringbare Punkte (188) umfassen, die entlang einer Elle, eines Daumens (184) und/oder eines Zeigefingers (140) der Bedienperson (34) angebracht sind.

12. Verfahren nach einem der Ansprüche 1 bis 11, wobei das Lager- und Kommissioniersystem ferner ein Sprachleitsystem (147) aufweist, das einen Kopfhörer (149) und ein Mikrofon (148), vorzugsweise in Form eines Headsets, aufweist.

13. Verfahren nach einem der Ansprüche 1 bis 12, wobei die Recheneinheit (26) eingerichtet ist, zu erkennen, dass sich die Hände (68) weder am Quellort noch am Zielort befinden.

## Claims

1. A method for controlling a storage and order-picking system, wherein the storage and order-picking system comprises: a manual work station (22), which is a packing station (20), including a defined working area (30) in which an operator (34) is to manipulate a piece good (40) by its hands (68) in a default manner in accordance with a picking task, which is communicated to the operator (34) visually and/or audibly, so that the operator (34) takes the piece good (40) within the working area (30) from a source location, moves it and delivers it to a target location on an order pallet (48) positioned within a packing frame (50) on a lifting device; a motion-sensor system (60) which detects motions (46; 146) of the hands (68) and/or forearms (66) of the operator (34) within the working area (30) of the work station (22) and which converts same into corresponding motion signals (27); and a computing unit (26), which is connected, in terms of data, to the motion-sensor system (60) and which is configured to convert the motion signals (27) into corresponding time-dependent trajectories in a virtual space, which is an image of the working area (30) and where the trajectories are compared to reference trajectories, for generating and outputing control signals (28) in terms of working-area control instructions, comprising the steps of:
- scanning the actual motion of the operator's arms and/or hands in the real world by means of the motion-sensor system, and converting same into at least one corresponding trajectory in the virtual world by means of the computing unit (26);
- by menas of the computing unit (26):
comparing the trajectory to the reference gestures which are generated in the virtual world and refer to a set of defined gstures respectively corresponding to a unique motion or resting position of the operator's arms and/or hands and distinguishing sufficiently from normal motions in the context of desired manipulations of the pice good within the working area, wherein each of the reference gesture has assigned at least one working-area control instruction;
generarting the assigned working-area control instruction if the comparison result in a sufficient match, and
directing the generated assigned working-area control instruction to the lifting device; and
- executing the assigned working-area control instruction by the lifting device, wherein the working-area control instruction (28) causes the lifting device to lower, that lowering of the order pallet is ended, that the order pallet is lifted, or that the order pallet is exchanged when the order pallet (48) is completly loaded.

2. The method (600) of claim 1, wherein the operator logs-in (S620) at a superordinated control unit (24) as soon as the operator first time (S612) enters a working cell (31).

3. The method of claim 2, wherein the operator (34) attaches (S610) at least one marker (130) to each hand (68) and/or each forearm (66) before the operator enters the working cell (31).

4. The method of claim 3, wherein the operator (34), and in particular the markers (130), are scanned permanently (S616) in order to recognize a log-in gesture.

5. The method of one of the claims 1 to 4, wherein the respective steps are executed in real time.

6. The method of one of the claims 1 to 5, wherein in a first step a position calibration is conducted (S410).

7. The method of one of the claims 1 to 6, wherein the operator's trajectories are stored and are data-associated to information of such piece goods which have been moved by the operator during a work shift, wherein a working period, a motion path in horizontal and vertical directions, and a weight of each moved piece good are considered.

8. The method of one of the claims 1 to 7, wherein a video image of the working area is generated additionally, to which the source volume, the target volume, the scanned hands, the scanned forearms, and/or the scanned operator is/are superimposed, and subsequently displayed to the operator via a display device in real time.

9. The method of one of claims 1 to 8, wherein the motion-sensor system (60) comprises a position-determining system (100-3, 100-4), which comprises at least one stationary light sources (64-1, 64-2) and at least one stationary camera (62-1, 62-2) and, wherein each source (64) illuminates the working area (30), wherein the at least one stationry camera (62) is arranged such that it detects at least some rays (106), which are reflected by the operator (34) and converted into reflection signals (109) by the at least one stationary camera (62), wherein the computing unit (26) is configured to perform an relative-position determination, based on the reflection signals (109), for the operator (34) within the working area (30).

10. The method of one of claims 1 to 9, wherein the position-determining system (100-4) further comprises markers (130), wherein each of the operator's hands (68) and/or each arms (66) is connected, in a removable manner, to one of the markers (130) in an unchangeable default orientation relative to the operator (34), and wherein the at least one stationary light source (64) emits homogeneous rays (108) at a preselected wavelength into the working area (30), which are not reflected by the operator (34), the piece good (40), and the working station (22) at all, or only weakly, wherein the marker (130) is formed of a material reflecting the preselected wavelength exceptionally strong.

11. The method of claim 10, wherein the markers (130) include longitudinal flexible stripes (132) or points (188) attachable along a grid, which are attached along an ell, a thumb (184), or an index finger (140) of the operator (34).

12. The method of one of claims 1 to 11, wherein the storage and order-picking system further comprises a voice-guidance system (147), which comprises an earphone (149) and a microphone (148), preferably in terms of a headset.

13. The method of one of claims 1 to 12, wherein the calculating unit (26) is configured to recognize that the hands (68) are neither at the source location, nor at the target location.

## Revendications

1. Procédé de commande d'un système de stockage et de préparation de commandes, dans lequel le système de stockage et de préparation de commandes comporte : un poste de travail manuel (22), qui est un poste d'emballage (20), comportant une zone de travail définie (30) dans laquelle un opérateur (34) doit, à l'aide de ses mains (68), manipuler un article (40) d'une manière prédéterminée qui est communiquée à l'opérateur (34) par voie visuelle et/ou auditive, l'opérateur (34) recevant l'article (40) à l'intérieur de la zone de travail (30) à partir d'un emplacement source, le déplaçant et le délivrant à une destination sur une palette de commande (48) qui est positionnée à l'intérieur d'un cadre d'emballage (50) sur un dispositif de levage ; un système de détection de mouvement (60) qui détecte des mouvements (46 ; 146) des mains (68) et/ou des bras (66) de l'opérateur (34) dans la zone de travail (30) du poste de travail (22) et les convertit en signaux de mouvement correspondants (27) ; et une unité de calcul (26) qui est reliée informatiquement au système de détection de mouvement (60) et qui est conçue pour convertir les signaux de mouvement (27) en trajectoires correspondantes en fonction du temps, dans un espace virtuel qui est une représentation de la zone de travail (30) et dans lequel les trajectoires sont comparées à des trajectoires de référence pour générer et délivrer des signaux de commande (28) sous la forme d'instructions de commande d'espace de travail, comprenant les étapes consistant à :
- analyser le mouvement réel des bras et/ou des mains de l'opérateur dans l'espace réel au moyen du système de détection de mouvement et le convertir en au moins une trajectoire correspondante dans l'espace virtuel au moyen de l'unité de calcul (26) ;
- au moyen de l'unité de calcul (26) :
comparer la trajectoire à des gestes de référence générés dans l'espace virtuel, qui font référence à un ensemble de gestes définis, correspondant chacun à un mouvement non ambigu ou à une position de repos des bras et/ou des mains de l'opérateur et qui sont respectivement suffisamment différents de mouvements normaux associés à des manipulations souhaitées de l'article dans l'espace de travail, dans lequel chaque geste de référence est associé à au moins un ordre de commande d'espace de travail ;
générer l'ordre de commande de zone de travail associé lorsque la comparaison indique une concordance suffisante et diriger l'ordre de commande de zone de travail associé généré vers le dispositif de levage ; et
- exécuter l'ordre de commande de zone de travail associé au moyen du dispositif de levage,
dans lequel l'ordre de commande de zone de travail (28) fait en sorte que le dispositif de levage s'abaisse, qu'un abaissement de la palette de travail soit interrompu, que la palette de commande soit relevée ou que la palette de commande soit remplacée lorsque la palette de commande (48) est complètement chargée.

2. Procédé (600) selon la revendication 1, dans lequel l'opérateur se connecte (S620) à une unité de commande de niveau supérieur (24) dès que l'opérateur entre (S612) pour la première fois dans une cellule de travail (31).

3. Procédé selon la revendication 2, dans lequel l'opérateur (34) fixe (S610) au moins un marqueur (130) à chaque main (68) et/ou avant-bras (66) avant d'entrer dans la cellule de travail (31).

4. Procédé selon la revendication 3, dans lequel l'opérateur (34), et en particulier les marqueurs (130), sont analysés en permanence (S616) pour détecter un geste de connexion.

5. Procédé selon l'une des revendications 1 à 4, dans lequel les étapes respectives sont effectuées en temps réel.

6. Procédé selon l'une des revendications 1 à 5, dans lequel un étalonnage de position est effectué lors d'une première étape (S410).

7. Procédé selon l'une des revendications 1 à 6, dans lequel les trajectoires de l'opérateur sont stockées et combinées informatiquement à des informations concernant des articles que l'opérateur a déplacés pendant une période de travail, dans lequel une durée de travail, une trajectoire de déplacement en direction horizontale et verticale et un poids pour chaque article déplacé sont pris en compte.

8. Procédé selon l'une des revendications 1 à 7, dans lequel une image vidéo de la zone de travail est générée, sur laquelle sont représentés de manière superposée le volume de la source, le volume de la cible, les mains analysées, les bras analysés et/ou l'opérateur analysé et est ensuite affichée en temps réel devant l'opérateur par l'intermédiaire d'un dispositif d'affichage.

9. Procédé selon l'une des revendications 1 à 8, dans lequel le système de détection de mouvement (60) comporte un système de détermination de position (100-3, 100-4) comprenant au moins une source lumineuse fixe (64-1, 64-2) et au moins une caméra fixe (62-1, 62-2), dans lequel chaque source lumineuse (64) éclaire la zone de travail (30), dans lequel l'au moins une caméra fixe (62) est disposée de manière à ce qu'elle détecte au moins certains faisceaux (106) qui sont réfléchis par l'opérateur (34) et que l'au moins une caméra fixe (62) convertit en signaux de réflexion (109), dans lequel l'unité de calcul (26) est conçue pour effectuer une détermination de position relative de l'opérateur (34) à l'intérieur de la zone de travail (30) sur la base des signaux de réflexion (109).

10. Procédé selon la revendication 9, dans lequel le système de détermination de position (100-4) comporte en outre des marqueurs (130), dans lequel chaque main (68) et/ou chaque bras (66) de l'opérateur (34) est relié de manière amovible à l'un des marqueurs (130) ayant une orientation prédéterminée non modifiable par rapport à l'opérateur (34), et dans lequel l'au moins une source lumineuse fixe (64) émet dans la zone de travail (30) des faisceaux homogènes (108) ayant une longueur d'onde sélectionnée, lesquels faisceaux ne sont pas ou ne sont que légèrement réfléchis par l'opérateur (34), l'article (40) et le poste de travail (22), dans lequel le marqueur (130) est constitué d'un matériau qui réfléchit particulièrement fortement la longueur d'onde sélectionnée.

11. Procédé selon la revendication 10, dans lequel les marqueurs (130) comprennent des bandes flexibles allongées (132) ou des points pouvant être placés en forme de quadrillage (188), qui sont fixés le long d'un cubitus, d'un pouce (184) et/ou d'un index (140) de l'opérateur (34).

12. Procédé selon l'une des revendications 1 à 11, dans lequel le système de stockage et de préparation de commandes comporte en outre un système de guidage vocal (147) comportant des écouteurs (149) et un microphone (148), de préférence sous la forme d'un casque d'écoute.

13. Procédé selon l'une des revendications 1 à 12, dans lequel l'unité de calcul (26) est conçue pour détecter le fait que les mains (68) ne se trouvent ni à l'emplacement source ni à la destination.
